(19) Europäisches Patentamt
European Patent Office
Office européen des brevets

(11) **EP 2 178 672 B1**

(12) **FASCICULE DE BREVET EUROPEEN**

(45) Date de publication et mention
de la délivrance du brevet:
**01.05.2013 Bulletin 2013/18**

(21) Numéro de dépôt: **08774994.1**

(22) Date de dépôt: **10.07.2008**

(51) Int Cl.:
*B23K 9/28* *(2006.01)*   *B23P 9/04* *(2006.01)*
*B24B 39/00* *(2006.01)*   *B24B 39/02* *(2006.01)*
*B25D 17/06* *(2006.01)*   *C21D 7/06* *(2006.01)*
*C21D 9/50* *(2006.01)*

(86) Numéro de dépôt international:
**PCT/EP2008/059033**

(87) Numéro de publication internationale:
**WO 2009/024406 (26.02.2009 Gazette 2009/09)**

(54) **DISPOSITIF DE MARTELAGE POUR REALISER LE MARTELAGE DES SOUDURES A L'INTERIEUR DE CONDUITES SOUS MARINES EN ACIER, PROCEDE DE REALISATION DE CONDUITES SOUS MARINES EN ACIER UTILISANT UN TEL DISPOSITIF**

HÄMMERVORRICHTUNG ZUM HÄMMERN VON SCHWEISSUNGEN IN UNTERSEESTAHLROHREN, SOLCH EINE VORRICHTUNG VERWENDENDES VERFAHREN ZUR HERSTELLUNG VON UNTERSEESTAHLROHREN

PEENING DEVICE FOR PEENING WELDS INSIDE STEEL SUBMARINE PIPES, PROCESS FOR PRODUCING STEEL SUBMARINE PIPES USING SUCH A DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.08.2007 FR 0757111**

(43) Date de publication de la demande:
**28.04.2010 Bulletin 2010/17**

(73) Titulaire: **Saipem SA**
**78180 Montigny-le-Bretonneux (FR)**

(72) Inventeurs:
• **KERDILES, Eric**
**F-78770 Marcq (FR)**
• **GOALABRE, Jean-Yves**
**F-13008 Marseille (FR)**
• **ROCHER, Xavier**
**F-78400 Chatou (FR)**

(74) Mandataire: **Domange, Maxime et al**
**Cabinet Beau de Lomenie**
**232, avenue du Prado**
**13295 Marseille Cedex 08 (FR)**

(56) Documents cités:
WO-A-2006/115754    WO-A-2007/041739
WO-A1-2008/139116    JP-A- 10 249 585
JP-A- 2004 066 311    US-A- 4 491 001
US-A1- 2004 245 323    US-A1- 2005 205 273

• DATABASE WPI Week 200627 Thomson Scientific, London, GB; AN 2006-259512 XP002474831 -& JP 2006 095561 A (MITSUBISHI JUKOGYO KK) 13 avril 2006 (2006-04-13)

## Description

La présente invention concerne un dispositif de martelage conformément au preambule de la revendication 1 (voir, par exemple, US 4 491 001) et un procédé de réalisation de conduite en acier, notamment une conduite sous-marine destinée à véhiculer des fluides corrosifs et notamment de l'eau, comprenant l'assemblage par soudage d'éléments unitaires de conduite et employant un tel dispositif de martelage (voir Revendication 10).

La présente invention concerne plus particulièrement une installation de liaison de subsurface entre un support flottant et une bouée de chargement de pétrolier.

La présente invention concerne plus particulièrement une installation de liaison fond-surface comprenant au moins une conduite sous-marine assurant la liaison entre un support flottant et le fond de la mer notamment à grande profondeur. Ces conduites sous-marines sont appelées "colonnes montantes" ou "risers" comme explicité ci-après, ces risers étant constitués d'éléments tubulaires unitaires soudés entre eux bout à bout, réalisés en acier.

Plus particulièrement, la présente invention a pour objet une conduite sous-marine du type riser assurant la liaison entre un support flottant et le fond de la mer, ledit riser étant constitué par une conduite rigide de type caténaire s'étendant depuis ledit support flottant jusqu'à un point de contact au fond de la mer.

Le secteur technique de l'invention est donc le domaine de la fabrication et de l'installation de conduites sous-marines et plus particulièrement de liaisons fond-surface de production pour l'extraction sous-marine de pétrole, de gaz ou autre matériau soluble ou fusible, ou d'une suspension de matière minérale, à partir de tête de puits immergé pour le développement de champs de production installés en pleine mer au large des côtes. L'application principale et immédiate de l'invention étant dans le domaine de la production pétrolière, ainsi que dans la ré-injection d'eau et la production ou ré-injection de gaz.

Un support flottant comporte en général des moyens d'ancrage pour rester en position malgré les effets des courants, des vents et de la houle. Il comporte aussi en général des moyens de forage, de stockage et de traitement du pétrole ainsi que des moyens de déchargement vers des pétroliers enleveurs, ces derniers se présentant à intervalle régulier pour effectuer l'enlèvement de la production. L'appellation de ces supports flottants est le terme anglo-saxon "Floating Production Storage Offloading" (signifiant "moyen flottant de stockage, de production et de déchargement") dont on utilisera le terme abrégé "FPSO" dans l'ensemble de la description suivante, ou encore "FDPU" ou "Floating Drilling & Production Unit" (signifiant "moyen flottant de forage et de production"), lorsque le support flottant est aussi utilisé pour effectuer les opérations de forage avec puits dévié dans la hauteur de la tranche d'eau.

Une conduite sous-marine ou un riser, selon l'invention peuvent être soit un "conduite de production" de pétrole brut ou de gaz, soit un conduite d'injection d'eau, assurant la liaison avec une tête de puits sous-marine installée au fond de la mer, soit encore un "riser de forage" assurant la liaison entre le support flottant et une tête de puits localisée au fond de la mer.

Dans les FPSO où l'on installe en général une multiplicité de lignes, on est amené à mettre en oeuvre soit des liaisons fond-surface de type tour-hybride, soit des liaisons de type caténaire en forme de "chaînette".

Lorsque la conduite de liaison fond-surface est du type caténaire, elle assure directement la liaison entre un support flottant et un point de contact au fond de la mer qui se trouve décalé par rapport à l'axe dudit support, ladite conduite prend de par son propre poids une configuration dite de "chaînette", formant une courbe dont le rayon de courbure diminue depuis la surface jusqu'au point de contact au fond de la mer, et l'axe de ladite conduite forme un angle $\alpha$ avec la verticale dont la valeur varie en général de 10 à 20 degrés au niveau du support flottant jusqu'à, théoriquement, 90 degrés au niveau du fond de la mer correspondant à une position théorique sensiblement tangentielle à l'horizontale comme il sera explicité ci-après.

Les liaisons de type chaînette sont en général réalisées à l'aide de conduites flexibles, mais leur coût est extrêmement élevé en raison de structure complexe de la conduite.

Ainsi on a été amené à développer des colonnes montantes sensiblement verticales, de manière à rapprocher de la surface la liaison souple en configuration de chaînette vers le support flottant, ce qui permet de minimiser la longueur de ladite conduite flexible, ainsi que les efforts qui lui sont appliqués, minimisant ainsi considérablement son coût.

Dès lors que la profondeur d'eau atteint et dépasse 800-1000m, il devient possible de réaliser ladite liaison fond-surface à l'aide d'une conduite rigide à paroi épaisse, car la longueur de la conduite étant considérable, sa souplesse permet d'obtenir une configuration de chaînette satisfaisante en restant dans des limites de contraintes acceptables.

Ces risers rigides en matériaux résistants de forte épaisseur, en configuration de chaînette, sont communément appelés par le terme anglo-saxon "Steel Catenary Riser" signifiant "riser en acier en forme de chaînette" dont on utilisera le terme abrégé "SCR" ou "riser caténaire" dans la présente description, qu'il soit en acier ou en autre matériau tel qu'un matériau composite.

Ces "SCR" ou "risers caténaires" sont beaucoup plus simples à réaliser que les conduites flexibles et donc moins onéreux.

La courbe géométrique formée par une conduite de poids uniforme en suspension soumise à la gravité, appelée "chaînette" est une fonction mathématique de type cosinus hyperbolique ($Coshx = (e^x + e^{-x})/2$, reliant l'abscisse et l'ordonnée d'un point quelconque de la courbe selon les formules suivantes :

$$y = R_0(\cosh(x/R_0) - 1)$$

$$R = R_o.(Y/R_o + 1)^2$$

dans lesquelles :

- x représente la distance dans la direction horizontale entre ledit point de contact et un point M de la courbe,

- y représente l'altitude du point M (x et y sont donc les abscisses et ordonnées d'un point M de la courbe par rapport à un repère orthonormé dont l'origine est audit point de contact)

- $R_0$ représente le rayon de courbure au dit point de contact, c'est à dire au point de tangence horizontale.

- R représente le rayon de courbure au point M (x, y)

Ainsi, la courbure varie le long de la chaînette depuis la surface, ou son rayon a une valeur maximale $R_{max}$, jusqu'au point de contact, ou son rayon a une valeur minimale $R_{min}$ (ou $R_0$ dans la formule ci-dessus). Sous l'effet des vagues, du vent et du courant, le support de surface se déplace latéralement et verticalement, ce qui a pour effet de soulever ou de reposer la conduite en forme de chaînette, au niveau du fond de la mer.

Ainsi, la conduite présente un rayon de courbure qui est maximal au sommet de la chaînette, en général, d'au moins 1500, notamment de 1500 à 5000m, c'est à dire au point de suspension sur le FPSO, et qui décroît jusqu'au point de contact avec le sol. A cet endroit, le rayon de courbure est minimal dans la portion en suspension. Mais, dans la partie adjacente reposant sur le fond de la mer, ladite conduite étant théoriquement en ligne droite, son rayon de courbure est théoriquement infini. En fait ledit rayon n'est pas infini mais extrêmement élevé, car il subsiste une courbure résiduelle.

Ainsi, au gré des mouvements du support flottant en surface, le point de contact se déplace d'avant en arrière et, dans la zone soulevée ou reposée sur le fond, le rayon de courbure passe successivement d'une valeur minimale $R_{min}$ à une valeur extrêmement élevée, voire infinie dans le cas d'une configuration théorique où la conduite sous-marine repose sur le fond de la mer sensiblement en ligne droite.

Ces flexions alternatives créent des phénomènes de fatigue concentrés dans toute la zone de pied de chaînette et la durée de vie de telles conduites est fortement réduite et en général incompatible avec les durées de vie recherchées pour les liaisons fond-surface, c'est à dire 20-25 ans, voire plus.

De plus, on observe que durant ces mouvements alternatifs du point de contact, la raideur de la conduite, associée à la courbure résiduelle mentionnée précédemment, va dans le temps creuser un sillon sur toute la longueur soulevée puis reposée et créer une zone de transition dans laquelle existera un point d'inflexion où le rayon de courbure, minimal en pied de chaînette, changera alors de sens dans ladite zone de transition, et croîtra pour atteindre enfin une valeur infinie dans la portion de conduite sous-marine reposant en ligne droite sur le fond de la mer.

Ces mouvements répétés sur de longues périodes créent un sillon d'autant plus important dans les sols peu consolidés que l'on rencontre couramment en grande profondeur, ce qui a pour effet de modifier la courbure de la chaînette et conduire, si le phénomène s'amplifie, à des risques d'endommagement des conduites, soit au niveau des conduites sous-marines reposant au fond de la mer, soit au niveau des SCR assurant la liaison entre ces conduites sous-marines reposant au fond de la mer et la surface.

Ces conduites sont réalisées par soudage bout à bout d'éléments unitaires de conduite. Les éléments unitaires de conduite sont eux-mêmes assemblés sous forme de rame, en général de deux à quatre éléments unitaires soudés bout à bout, puis transporté en mer. Et, de façon connue, ces rames sont assemblées par soudage les unes aux autres en mer à partir d'un navire de pose de conduite, notamment au niveau d'une tour de pose en J. Les soudures d'assemblage sont réalisées de préférence et principalement depuis l'extérieur de la conduite.

La portion la plus critique des risers se situe au niveau des soudures d'assemblage des éléments unitaires de conduite et, notamment, dans la portion la plus proche du point de contact et, la plus grande partie des efforts dans cette partie basse de la chaînette sont en fait engendrés par les mouvements propres du support flottant et par les excitations qui surviennent dans la partie haute de la chaînette soumise au courant et à la houle, l'ensemble de ces excitations se propageant alors mécaniquement tout le long de la conduite jusqu'au pied de chaînette.

Les aciers constituant les conduites sont sélectionnés pour résister à la fatigue pendant toute la durée de vie des installations, mais les soudures entre éléments de conduites, dans cette zone du pied de chaînette, constituent des points faibles lorsque ladite conduite véhicule soit de l'eau, soit des fluides comportant de l'eau et plus particulièrement de l'eau salée. En effet, lesdites soudures en présence d'eau sont sujettes à des phénomènes de fatigue et de corrosion créant dans le temps, sous contraintes variables de flexion, des fissures conduisant à la ruine de ladite conduite.

Pour pallier à ce problème, on réalise des soudures entre éléments de conduite à l'aide d'un acier inoxydable ou un alliage résistant à la corrosion. Les alliages anti corrosion sont bien connus de l'homme de l'art, il s'agit principalement d'alliages base nickel, notamment du type inconel, de préférence de grade particulier, notamment en inconel 625 ou 825, lesdits inconels présentant aussi une excellente résistance à la fatigue de par leur haute limite élastique et permettant ainsi d'atteindre des durées de vie de 20 à 30 ans.

Pour que la soudure puisse être résistante et effectuée dans de bonnes conditions, on a proposé de revêtir l'intérieur des deux éléments conduites à souder ensemble du même acier inoxydable ou alliage résistant à la corrosion sur quelques cm au niveau des extrémités des éléments de conduite à souder ensemble, de manière à ce que la passe de pénétration de la soudure qui constituera la future paroi en contact avec le fluide soit du même métal que le métal d'apport de la soudure, en particulier de l'inconel. Ce revêtement en acier inoxydable ou alliage anti corrosion, notamment de type inconel, se fait par un procédé coûteux à l'arc électrique appelé « cladding », c'est-à-dire « revêtement », réalisé en général à l'aide d'une procédé TIG ou plasma, associé à un fil d'apport ou à une poudre d'acier inoxydable ou d'alliage résistant à la corrosion.

Le but de la présente invention est de fournir un nouveau dispositif de martelage et un procédé de réalisation de conduites sous marines destinées à véhiculer des fluides corrosifs et notamment de l'eau comprenant l'assemblage par soudage de rames de conduites sous marines à partir d'un navire de pose en mer de conduites sous marines qui soit :

- fiable en termes de résistance à la fatigue au niveau de chacune des soudures, et notamment en permettant d'éviter l'apparition de fissures dans le temps,

- en affectant le moins possible les performances de résistances mécaniques et / ou augment le moins possible les pertes de charges du fluide véhiculé à l'intérieur de la conduite en opération, et

- simple et le moins coûteux possible à mettre en oeuvre , et notamment dans lequel on réalise le moins possible d'étape d'assemblage et notamment de soudage à bord du navire de pose.

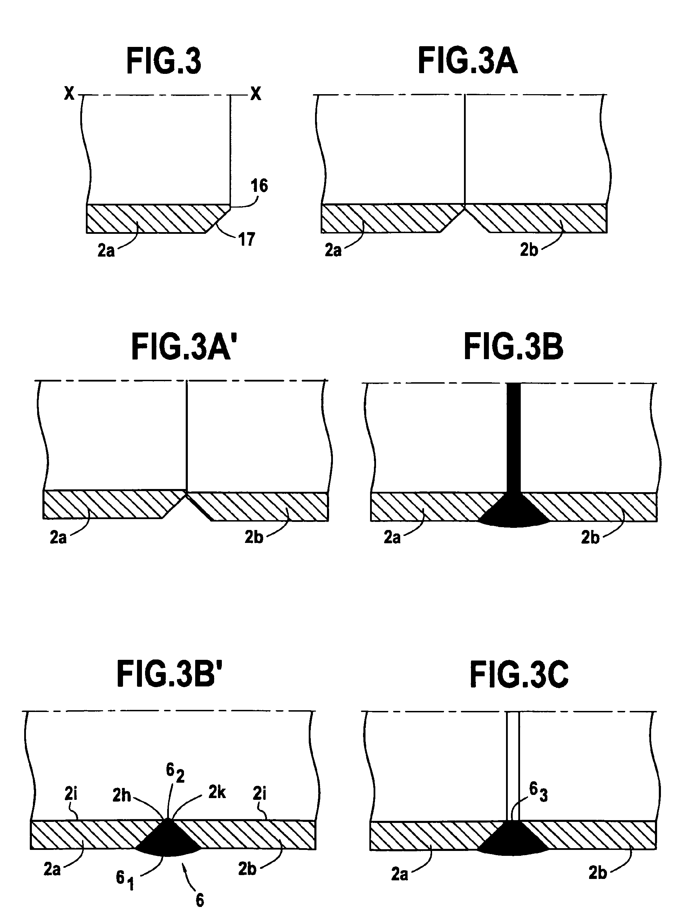

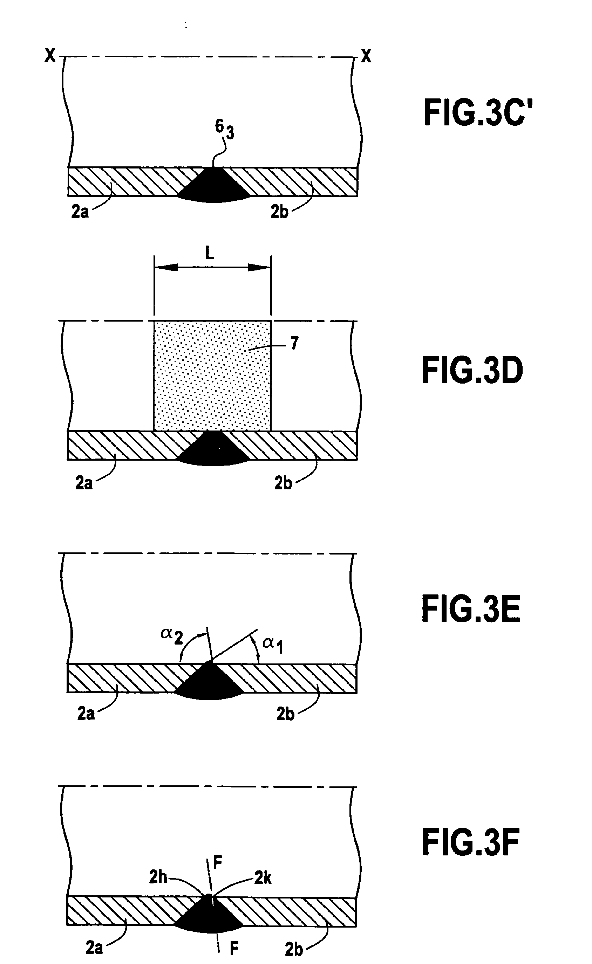

Selon la présente invention, les inventeurs ont découverts que des amorces de fissure se localisent à l'intérieur de la conduite, au niveau de la petite protubérance du cordon de soudure tournée vers l'intérieur de la conduite et non pas sur la face externe de la masse principale du cordon de soudure à l'extérieur de la conduite. Plus précisément, comme explicité dans la description détaillée qui va suivre en référence aux figures 3E et 3F, les inventeurs ont découverts que l'origine des ruines des soudures réside au niveau de la zone de transition entre la soudure et la surface interne en acier de base de la conduite adjacente, zone au niveau de laquelle, des contraintes de traction liées au choc thermique lors du soudage se traduisent par des défauts physique, notamment des amorces de fissuration localisées à ce niveau.

En effet, lors du soudage, il se produit des retraits ou trempes localisés incontrôlables, conduisant à des états de contrainte de contraction du métal localisé dans et à proximité de la zone de la soudure, alors que le reste de la surface adjacente de la conduite est soit au repos, soit en compression.

En général, on résout ces problèmes de contrainte de contraction localisés des soudures par des recuits pour relâcher la contrainte. On connaît d'autres moyens de traitement de ces problèmes au niveau des soudures pour obtenir une relaxation de contrainte de traction, mais ceux-ci ne sont pas compatibles avec les contraintes de temps et de cadence de pose en mer recherchées. Mais, dans le cas présent, pour le soudage d'éléments de conduite sous-marine lors de la pose en mer, ces traitements de recuit ne sont pas possibles.

On connaît dans US 4 491 001 un dispositif de martelage de soudures annulaires à l'intérieur de conduites, les cordons de soudure en acier ou alliage métallique desdits soudage étant disposés à l'extérieur de la conduite, ledit martelage étant réalisé pour augmenter la compression de l'acier ou métal au niveau des soudures et supprimer les contraintes de traction. Dans ce document le dispositif de martelage comprend un dit outil de martelage monté à l'extrémité d'un arbre traversant axialement la dite conduite. Ledit arbre est déplacé en rotation sur lui-même autour dudit axe longitudinal axial (XX) de la conduite à l'aide d'un système de pignons et engrenages disposés à l'extérieur de la conduite. Et l'on déplace le dit arbre ou la dite conduite en translation longitudinale relative dans la direction axiale de la conduite. Ainsi, ledit outil de martelage est apte à se déplacer en translation relative longitudinale (XX) par rapport à ladite conduite et en rotation autour dudit axe longitudinal axial (XX) de la conduite à l'extrémité dudit arbre au niveau desdites soudures. Le dit outil de martelage comprend une pluralité de marteaux aptes à être déplacés en translations radiales répétées dans la dite conduite pour réaliser ledit martelage contre et perpendiculairement à la surface interne de la conduite à marteler au niveau desdites soudures. Les différents marteaux sont répartis le long de la circonférence interne de la conduite. Lesdits marteaux sont actionnés simultanément en translations relatives radiales par un même moteur mettant en oeuvre une énergie pneumatique.

Ce type de dispositif de martelage réalise un martelage aléatoire mais uniforme sur toute la zone martelée de façon à supprimer la protubérance interne au dos du cordon de soudure annulaire externe.

On connaît dans FR-2 791 293 un outil de martelage piézoélectrique et dans US-3,935,055 un outil de martelage à énergie pneumatique, lesdits outils étant à broches multiples indépendantes projetées de manière aléatoire sur une surface à traiter.

Le but de la présente invention est donc de fournir un dispositif et procédé de martelage qui permette de réaliser un martelage plus précis et davantage contrôlé, notamment un martelage différentié au niveau de la zone de transition entre la soudure et la surface interne adjacente de la conduite, sans nécessairement chercher à supprimer le bourrelet interne au dos du cordon de soudure.

Pour ce faire, la présente invention fournit essentiellement un dispositif de martelage utile pour la réalisation d'un martelage de zones de soudures annulaires à l'intérieur de conduites sous marines, comprenant au moins un outil de martelage, ledit dispositif comprenant au moins un marteau actionné en translations alternatives radiales de martelage contre la surface interne de la conduite et/ou de ladite soudure, où

- ledit outil de martelage comprend un unique marteau, et

- le dit marteau est monté à pivotement de manière à pouvoir faire varier son inclinaison par rapport à la surface à marteler, et

- ledit dispositif comprend un chariot apte à se déplacer en translation longitudinale axiale XX à l'intérieur d'une conduite et supportant des moyens de déplacements dudit outil de martelage en translation longitudinale et radiale, et en rotation relatives par rapport audit chariot, et

- ledit marteau coopère avec des moyens d'actionnement en translations alternatives radiales de martelage, par mise en oeuvre d'une énergie électro magnétique et déplacement alternatif à l'intérieur d'une bobine solénoïde coopérant en outre de préférence avec un ressort.

Plus précisément, la présente invention fournit un dispositif de martelage utile pour la réalisation d'un martelage à l'intérieur de conduites sous marines en acier assemblées par soudage annulaire des extrémités bout à bout d'éléments de conduite unitaires, les cordons de soudure étant réalisés à l'extérieur de la conduite, ledit dispositif comprenant au moins un outil de martelage apte à se déplacer en translation longitudinale axiale XX dans la direction axiale de la conduite et en rotation autour dudit axe longitudinal axial XX de la conduite au niveau desdites soudures à l'intérieur de la conduite, le dit dispositif de martelage comprenant au moins un marteau comprenant :

- un corps principal constituant une massette de forme allongée selon une direction longitudinale de translation alternative relative Y1Y1 du dit marteau par rapport à l'outil de martelage et à la surface interne de la conduite ou de la soudure à marteler, et

- un élément bombé de courbure de forme convexe à l'extrémité de la dite massette et solidaire de celle-ci, le dit élément bombé étant apte à rentrer en contact avec ladite surface à marteler créant ainsi des impacts sous forme de cratères sous l'effet de l'énergie cinétique du dit marteau lorsque celui-ci est actionné en martelage par dites translations alternatives radiales, caractérisé en ce que

a) ledit outil de martelage comprend un unique marteau, et

b) le dit marteau est monté à pivotement par rapport audit outil de martelage de manière à pouvoir faire varier l'inclinaison de la dite massette de forme allongée et de la dite direction de translation alternative relative Y1Y1 du dit marteau par rapport à la direction radiale YY, et

c) ledit dispositif comprend :

- un premier chariot apte à se déplacer en translation longitudinale axiale XX à l'intérieur d'une conduite,

- le dit premier chariot supportant des moyens de déplacements dudit outil de martelage en translation longitudinale axiale XX relative par rapport audit premier chariot, notamment de manière à ce que ledit outil de martelage puisse réaliser un martelage au niveau de ladite zone de soudure et de part et d'autre de celle-ci sur une dite distance à marteler L, dans ladite direction axiale longitudinale XX, chevauchant ladite soudure, au moins égale à la largeur de la soudure augmentée de part et d'autre de 1 à 10mm, et

- ledit premier chariot supportant des moyens de rotation relative dudit outil de martelage par rapport au premier chariot, autour dudit axe longitudinal axial XX de la conduite, notamment au niveau desdites soudures, permettant ainsi d'effectuer ledit martelage sur toute la circonférence de la surface interne de ladite conduite par une dite rotation de l'outil de martelage, et

- ledit premier chariot supportant des moyens de déplacement dudit outil de martelage en dite translation radiale YY relative par rapport audit premier chariot, permettant notamment d'approcher ledit outil de martelage contre la surface interne de la conduite, ou de dégager l'outil de martelage en retrait par rapport à la surface interne de la conduite, et

d) le dit outil de martelage comprend des moyens d'actionnement en martelage par dites translations alternatives radiales dudit marteau, par mise en oeuvre d'une énergie électro magnétique, le marteau comprenant un dit corps principal en matériau magnétique apte à se déplacer alternativement dans les deux sens à l'intérieur d'une bobine solénoïde fixe selon la direction axiale dudit solénoïde correspondant à la dite direction longitudinale dudit marteau $Y_1Y_1$, sous l'effet d'un champs magnétique créé à l'intérieur du solénoïde lorsque ledit solénoïde est alimenté en courant électrique continu de manière alternée respectivement dans les deux sens, ledit corps principal coopérant en outre de préférence avec un ressort.

On entend ici par « translations radiales alternatives » des translations répétées en sens aller et retour successivement contre la surface interne de la conduite de manière à créer une pluralité d'impacts, de préférence en forme de cratères adjacents recouvrant toute la surface martelée.

Ce type de moteur électromagnétique à solénoïde est connu de l'homme de l'art sous la désignation de « moteur linéaire », notamment pour les bobines de haut parleur (en anglais «voice coil motor») présentant un fonctionnement similaire mais en général inverse avec une bobine mobile alors que le barreau aimant reste fixe.

Pour ce mode de réalisation d'actionnement électro magnétique, de préférence, ledit corps principal est réalisé en acier ferromagnétique, ou en alliage magnétique, notamment en alliage de Samarium-Cobalt ou alliage de Néodyme-Bore.

Dans un mode préféré de réalisation, l'alimentation électrique du solénoïde est pilotée par une commande numérique permettant d'adapter l'énergie de martelage, c'est-à-dire l'énergie transférée par le marteau à la surface traitée, en fonction de la position du marteau déterminée avec un capteur.

Ainsi, il est possible de transférer l'énergie sensiblement constante sur toute la surface à traiter.

Avantageusement, le dispositif de martelage selon la présente invention comprend les caractéristiques suivantes selon lesquelles :

- ledit premier chariot est motorisé et supporte un premier arbre, disposé à l'intérieur de la conduite dans ladite direction longitudinale axiale XX de la conduite, et

- ledit premier arbre supporte au moins des moyens ou support de guidage transversal de préférence en forme de poutre, aptes à guider le déplacement d'au moins un deuxième chariot en translation radiale dans une direction transversale perpendiculaire à ladite direction longitudinale axiale XX, ledit deuxième chariot supportant ledit outil de martelage et le dit deuxième chariot comprenant de préférence un moyen apte à maintenir ledit outil de martelage en position en regard de la surface interne de ladite conduite, et

- ledit premier arbre comprend un moyen d'entraînement en rotation contrôlée sur lui-même autour de son dit axe longitudinal axial XX, de manière à pouvoir déplacer en dite rotation relative ledit support de guidage transversal radial et ledit outil de martelage sur toute la circonférence de la surface interne de la conduite, et

- ledit premier arbre est, de préférence, apte à être entraîné en translation relative par rapport audit premier chariot dans ladite direction longitudinale axiale XX de la conduite, sur au moins une distance limitée L.

Avantageusement encore, le dit premier chariot est motorisé par un moteur alimenté depuis l'extérieur de la conduite par un ombilical, et ledit premier chariot comprend des roulettes appliquées contre la surface interne de la conduite et guidant le déplacement en dite translation longitudinale axiale dudit premier chariot à l'intérieur de la conduite, les dites roulettes étant reliées à un corps principal axial du premier chariot, par un système de bras montés en parallélogrammes articulés.

Plus particulièrement encore, ledit système de bras montés en parallélogrammes articulés comprend trois structures de parallélogramme, portant chacune deux roulettes alignées dans la direction axiale XX de la conduite, les trois structures de parallélogramme étant de préférence uniformément réparties à 120° les uns des autres, et actionnés de manière synchrone par des ressorts ou des vérins, de manière à ce que le corps principal dudit premier chariot reste sensiblement dans l'axe XX de ladite conduite.

Avantageusement, le dit élément bombé à courbure convexe dudit marteau définit une surface de révolution de forme sphérique, ovoïde ou parabolique, de préférence sphérique, réalisé dans un acier ou carbure métallique de plus grande dureté que le dit corps principal du marteau et le dit élément convexe présente une dimension en section transversale réduite, notamment un diamètre réduit, par rapport à la dimension correspondante dudit corps principal, notamment le diamètre en section transversale du dit corps principal du marteau.

Plus particulièrement, ledit élément convexe de terminaison du marteau présente une dureté Vickers supérieure à 500HV, de préférence supérieure à 750HV.

Le corps principal présente des dimensions suffisantes en longueur et section transversale, donc une masse suffisante pour conférer une énergie cinétique importante au marteau, tandis que la dimension réduite de la section transversale de l'élément terminal convexe et sa plus grande dureté vise à concentrer cette énergie cinétique au point d'impact avec la surface à traiter sur une surface réduite, ladite grande dureté de l'élément terminal évitant ainsi toute déformation permanente dudit élément terminal.

De préférence, le dit élément convexe terminal est en carbure de tungstène. On peut également mettre en oeuvre un dit élément convexe terminal en acier trempé du type de ceux mis en oeuvre pour les billes de roulements à billes. Dans tous les cas, le corps principal est en matériau magnétique, soit partiellement, soit intégralement.

Avantageusement, le dispositif comprend une pluralité d'outils de martelage comprenant chacun un unique dit marteau, chaque outil de martelage étant apte à être déplacé indépendamment et chaque marteau étant apte à être commandé en martelage indépendamment.

Plus particulièrement, le dispositif comprend 2 outils de martelage, ledit premier arbre supportant deux dits deuxièmes chariots supportant chacun un dit outil de martelage sur un même dit support de guidage transversal.

Plus particulièrement encore, le dispositif selon l'invention comprend 4 outils de martelage, ledit premier arbre supportant deux dits supports de guidage transversal décalés dans la direction longitudinale et en rotation, chacun des dits supports de guidage étant apte à guider le déplacement de deux dits deuxièmes chariots en translation radiale supportant chacun un unique dit outil de martelage.

La présente invention fournit un procédé de réalisation de conduite en acier assemblée par soudage des extrémités bout à bout d'éléments de conduite unitaires , les cordons de soudure en acier ou alliage métallique desdits soudage étant disposés à l'extérieur de la conduite, caractérisé en ce que on réalise un martelage localisé à l'intérieur de la conduite pour augmenter la compression de l'acier ou métal au niveau desdites soudures et sur la surface interne périphérique de la conduite adjacente, de part et d'autre des soudures , de manière à créer un corridor de surface martelée sur une distance L limitée dans la direction longitudinale axiale de ladite conduite, de préférence sur une distance L supérieure à la largeur de la soudure, à l'intérieur de la conduite, de préférence une distance L au moins égale à la largeur de la soudure, à l'intérieur de la conduite augmentée de part et d'autre d'une largeur de 1 à 10 mm, le dit martelage étant réalisé en créant une pluralité d'impacts, avec un dispositif de martelage selon l'invention.

De préférence, la soudure comprend un cordon de soudure principale à l'extérieur de la conduite et une protubérance ou bourrelet interne d'épaisseur moindre dépassant du coté de l'intérieur de la conduite, et on réalise ledit martelage au moins dans la zone de transition entre la surface interne du dit bourrelet au dos du cordon de soudure et la surface interne adjacente de la conduite, en faisant varier l'inclinaison $\beta$ de la direction longitudinale et de translation du dit marteau $Y_1$, $Y_1$ par rapport à ladite direction de translation radiale dudit deuxième chariot YY.

Plus particulièrement, on réalise ledit martelage de manière à réaliser la mise en compression ou augmenter la compression sur une épaisseur de 0,2 à 2 mm de ladite surface interne de la conduite et de ladite soudure.

Dans un mode de réalisation, la distance limitée L représente 1 à 3 fois l'épaisseur de la conduite.

Plus particulièrement encore, on réalise un martelage de manière à obtenir une contrainte de compression supérieure à 5 MPa, de préférence supérieure à 50 MPa, notamment de 50 à 1000 MPa, sur toute la surface martelée.

Plus particulièrement, ledit corridor martelé s'étend sur une distance L au moins égale à la moitié de l'épaisseur de la paroi de conduite, de préférence encore une distance L inférieure 2 fois l'épaisseur de la conduite.

Plus particulièrement, la soudure comprend un cordon de soudure principal à l'extérieur de la conduite et une protubérance ou bourrelet interne d'épaisseur plus réduite dépassant du coté de l'intérieur de la conduite. Cette protubérance ou bourrelet interne résulte de la fusion partielle des extrémités des éléments unitaires assemblés par soudage lors du traitement thermique de soudage.

Plus particulièrement, le dit corridor martelé s'étend sur une distance L correspondant à la largeur de la soudure à l'intérieur de la conduite, notamment la largeur du dit bourrelet interne, lequel bourrelet présente en pratique une largeur de 3 à 5mm, que l'on augmente de part et d'autre d'une largeur de 1 à 10 mm soit une distance L de 5 à 25mm.

On entend ici par "martelage", un traitement de surface par une multiplication d'impacts à l'aide d'un dit marteau, qui réalise une augmentation du niveau de contrainte de compression sur une zone de la surface à traiter.

Selon la présente invention, c'est toute la surface dudit corridor, c'est-à-dire de la section de surface interne cylindrique, de part et d'autre de la soudure et chevauchant celle-ci, qui subit ces impacts, aucune zone de la surface en dehors dudit corridor ne nécessitant d'être frappée par un tel impact.

Lorsque l'élément bombé à courbure convexe à l'extrémité du marteau vient frapper la surface à traiter lors de l'impact, son énergie cinétique est transformée partiellement en énergie de déformation plastique et élastique de la surface traitée ce qui a pour effet de créer un forgeage à froid localisé, et donc d'augmenter la contrainte de compression du matériau à ce niveau, supprimant de ce fait les zones à contraintes résiduelles de traction. Il se crée un léger cratère sur la surface martelée avec une plastification accrue de l'acier de la conduite, au centre dudit cratère par rapport à sa périphérie.

Un martelage selon la présente invention consiste, en quelque sorte, à réaliser un forgeage à froid qui supprime les contraintes résiduelles de traction, en déformant la matière au niveau de la surface martelée. Il y a lieu d'observer que l'on ne cherche pas à résorber la surépaisseur éventuelle liée à un bourrelet ou protubérance interne du cordon de soudure, mais on cherche seulement à compresser, de manière sensiblement uniforme, la surface de la zone de soudage et les zones adjacentes, en utilisant une énergie suffisante pour plastifier et déformer le métal de manière à en supprimer toutes les contraintes résiduelles de traction dues à l'opération de soudage.

Plus particulièrement encore, lesdites extrémités d'éléments unitaires de conduite à souder comportent, en coupe axiale longitudinale, une extrémité droite du coté intérieur à la conduite formant talon sur, de préférence, au moins un quart de l'épaisseur de la partie courante de la conduite et prolongée vers l'extérieur de la conduite par un chanfrein incliné.

Dans ce cas, la protubérance ou bourrelet interne dépassant du cordon de soudure provient de la fusion dudit talon et du métal d'apport.

On comprend que ledit chanfrein est tourné vers l'extérieur de la conduite, de sorte qu'il peut recevoir un cordon de soudure déposé entre deux chanfreins aux extrémités de deux éléments de conduite mis bout à bout de chanfrein, formant sensiblement un V aux extrémités de deux éléments de conduite à assembler par soudage mis bout à bout.

Dans un mode de réalisation avantageux, on réalise un enlèvement de matière par meulage ou fraisage, préalable de la surface interne de la conduite et du cordon de soudure au niveau de la surface à marteler, avant ledit martelage, avec un outil de meulage à meule rotative monté à la place ou avec un dit outil de martelage, sur un dit premier chariot.

Plus particulièrement encore, le procédé selon l'invention est caractérisé en ce qu'il comprend les étapes dans lesquelles :

- on déplace en translation ledit premier chariot à l'intérieur de ladite conduite dans ladite direction longitudinale axiale XX, de sorte que ledit outil de martelage soit sensiblement positionné de manière à ce que celui-ci puisse réaliser un martelage dans ladite zone de soudure et de part et d'autre de celle-ci, dans ladite direction axiale longitudinale XX, sur une dite distance à marteler L, chevauchant ladite soudure, puis

- on déplace ledit outil de martelage contre ou à proximité de la surface interne de la conduite par translation radiale dudit outil de martelage, puis

- on déplace en rotation ledit outil de martelage autour dudit axe longitudinal axial XX, sur la circonférence de la surface interne de conduite, puis

- le cas échéant, on déplace en translation relative l'outil de martelage dans la direction longitudinale axiale XX par rapport audit premier chariot, de façon à effectuer le martelage et la compression sur toute la surface martelée.

On comprend que le déplacement en translation relative longitudinale de l'outil de martelage par rapport audit premier chariot peut se faire soit de manière continue, soit de manière séquentielle entre deux dites rotations dudit outil de martelage. Ceci permet de ne

pas laisser de surface non martelée entre deux zones d'impact desdits projectiles successifs, et ainsi d'atteindre les zones les plus critiques, situées à l'interface entre le bourrelet du cordon de soudure et le métal de base de la conduite.

Plus particulièrement, on réalise lesdits soudages en acier au carbone, en acier inoxydable ou en alliage résistant à la corrosion, de type inconel, à haute élasticité, résistant à la fatigue, de préférence en inconel de grade 625 ou 825.

Plus particulièrement encore, le procédé selon l'invention comprend les étapes suivantes successives, dans lesquelles :

1) on réalise, en atelier à terre, l'assemblage par dit soudage des extrémités respectives d'au moins deux éléments unitaires de conduite, mis bout à bout pour former des rames de conduite, et

2) on réalise en mer, à partir d'un navire de pose équipé d'une tour de pose en J, l'assemblage par dit soudage des extrémités respectives desdites rames pour former une conduite.

Le procédé de réalisation de conduite selon l'invention permet d'obtenir une conduite sous-marine de liaison fond-surface, dont au moins une partie comprend des zones de dites soudures d'assemblage d'éléments unitaires de conduites mises en compression par martelage différencié au niveau de ladite zone de transition à l'aide d'un dit marteau incliné.

Plus particulièrement, le procédé selon l'invention permet d'obtenir une conduite sous-marine de liaison fond-surface, comprenant des éléments de conduites unitaires assemblés bout à bout par soudage et dont au moins une partie de la conduite comprend des zones de dites soudures d'assemblage d'éléments unitaires de conduites dans lesquelles la soudure comprend un cordon de soudure principal à l'extérieur de la conduite et une protubérance ou bourrelet interne d'épaisseur moindre dépassant du côté de l'intérieur de la conduite et dont un corridor de la surface interne de la conduite au niveau desdites soudures et de part et d'autre des soudures est martelé sur une distance (L) par une pluralité d'impacts en forme de cratère adjacents recouvrant toute la surface dudit corridor, la surface interne dudit corridor étant mise en compression uniforme de manière à en supprimer toutes les contraintes résiduelles de traction de l'opération de soudage.

Plus particulièrement, un procédé de réalisation de conduite selon l'invention permet d'assembler une conduite sous-marine de liaison fond-surface, caractérisée en ce qu'il s'agit d'une conduite caténaire du type SCR dont au moins une partie comprenant la zone en contact avec le sol s'étendant sur au moins 100 m, de préférence 200 m au dessus du sol.

D'autres caractéristiques et avantages de la présente invention apparaîtront à la lumière détaillée des modes de réalisation qui vont suivre, en référence aux figures suivantes, dans lesquelles :

- la figure 1 est une vue de côté d'une conduite en configuration de chaînette simple 1, suspendue à un support flottant 10 de type FPSO, et dont l'extrémité inférieure repose sur le fond de la mer 13, représentée dans trois positions différentes 1a, 1b, 1c.

- la figure 1A est une coupe en vue de côté détaillant la tranchée 12 creusée par le pied 11 de chaînette lors des mouvements de soulèvement et de repos de la conduite sur le fond marin.

- la figure 2 est une coupe longitudinale d'une conduite et une vue de côté d'un robot de martelage 3 à l'intérieur de la conduite en cours d'assemblage, lors du traitement de martelage de la soudure 6 entre les extrémités de deux éléments de conduite 2a, 2b, la soudure n'étant représentée qu'en moitié inférieure de la coupe.

- la figure 2A est une vue en coupe de la conduite avec une vue de coté de l'intérieur de la conduite montrant un robot de martelage 3.

- la figure 3 représente une vue en coupe longitudinale d'une extrémité d'un élément de conduite montrant une partie droite (talon) et une partie inclinée (chanfrein).

- les figures 3A, 3B, 3C et 3D sont des coupes ou vues de côté de tout ou partie des extrémités respectives des deux éléments de conduite à assembler, respectivement dans les phases d'approche et de positionnement (3A), de soudage (3B), de meulage interne (3C), et de traitement par martelage (3D). Sur les figures 3C et 3D, on n'a représenté qu'une partie inférieure de la soudure pour mieux montrer la surface meulée intérieure $6_3$ du cordon de soudure 6.

- la figure 3A' est une variante de la figure 3A en cas de léger décalage des talons des extrémités des deux éléments de conduite à assembler.

- les figures 3B' et 3C' sont des sections longitudinales partielles relatives aux figures 3B et 3C ne montrant que la partie inférieure de la soudure et de la conduite.

- les figures 3E et 3F représentent des variantes de la figure 3B' dans le cas où les extrémités de conduite sont décalées, comme dans la figure 3A', une amorce de fissure depuis l'intérieur étant montrée en 2k, figure 3F.

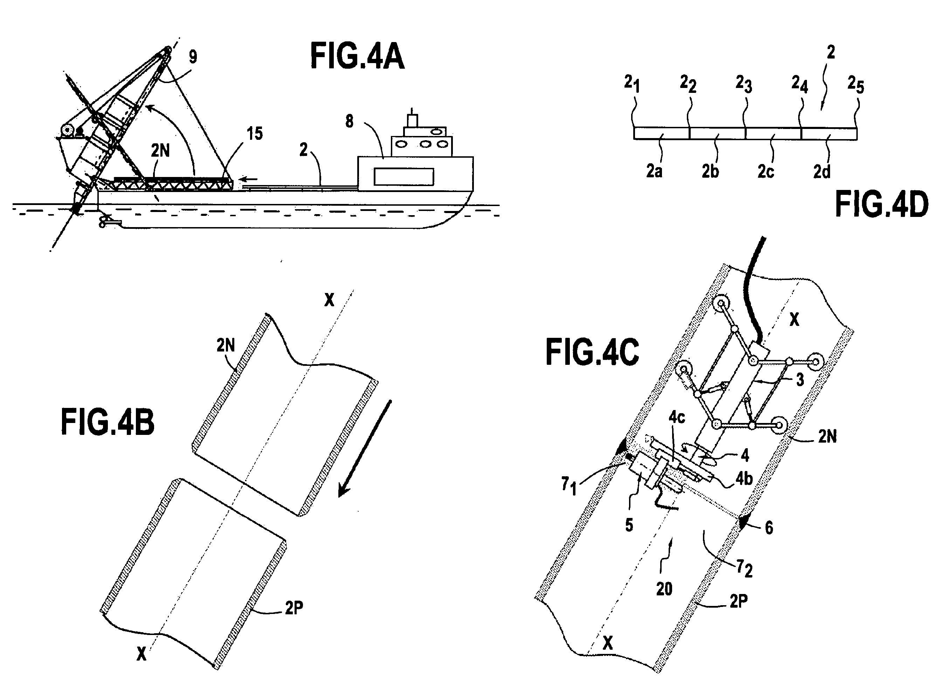

- la figure 4A représente un navire de pose de conduites équipé d'une tour de pose en J.

- la figure 4B représente en vue de côté une conduite 2P en cours de descente jusqu'au fond de la mer et maintenue en tension au sein de ladite tour de pose en J, et une rame 2N maintenue dans la partie supérieure de ladite tour de pose en J, ladite rame étant approchée de ladite conduite 2P en suspension, en vue d'être assemblée par soudage.

- la figure 4C représente en coupe en vue de côté les deux extrémités d'éléments de conduite. Dans la partie inférieure, le martelage n'a pas encore été effectué en $7_2$, alors que ledit martelage est en cours dans la demi-partie supérieure en $7_1$.

- la figure 4D représente en vue de côté une rame 2 constituée de quatre éléments de conduite 2a-2d assemblés entre eux et prêts à être transférés sur le navire de pose en J de la figure 4A.

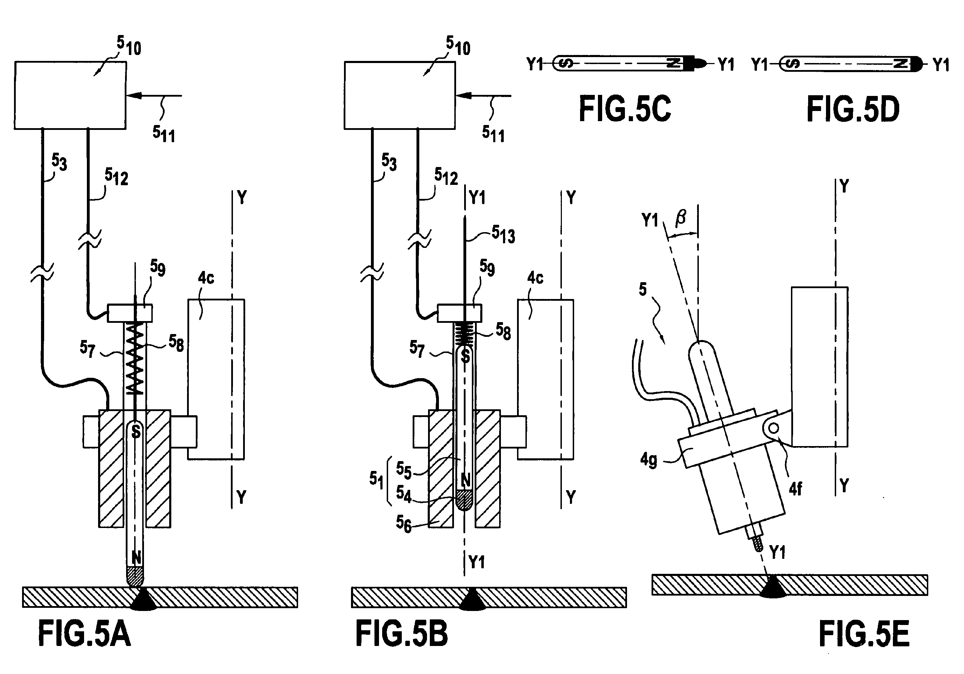

- les figures 5A-5B représentent en vue de côté un outil de martelage 5 à marteau unique associé à une électronique de contrôle, le marteau étant respectivement en position déployée (figure 5A) et rétractée (figure 5B).

- les figures 5C-5D représentent en vue de côté des variantes de marteau dont l'extrémité de percussion présente respectivement une courbure parabolique à rayon de courbure faible (figure 5C) et une courbure sphérique à rayon de courbure relativement élevé (figure 5D) en coupe longitudinale selon l'axe Y1Y1 du marteau.

- la figure 5E représente une vue de côté d'un outil de martelage orientable à marteau unique.

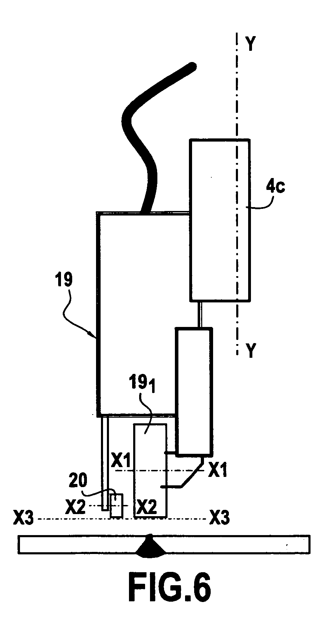

- la figure 6 représente une vue détaillée d'un outil de meulage 19 monté sur un dit second chariot 4c, à la place de l'outil de martelage 5.

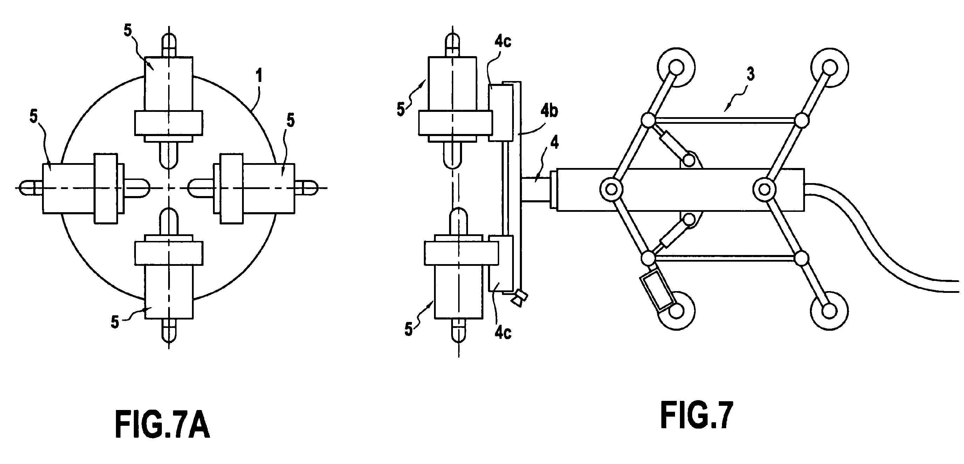

- la figure 7 représente une vue de coté d'un robot 3 équipé de 2 outils de martelage 5.

- la figure 7A représente une vue de face de l'extrémité d'un robot 3 équipé d'un plateau portant 4 outils de martelage opposés diamétralement 2 à 2.

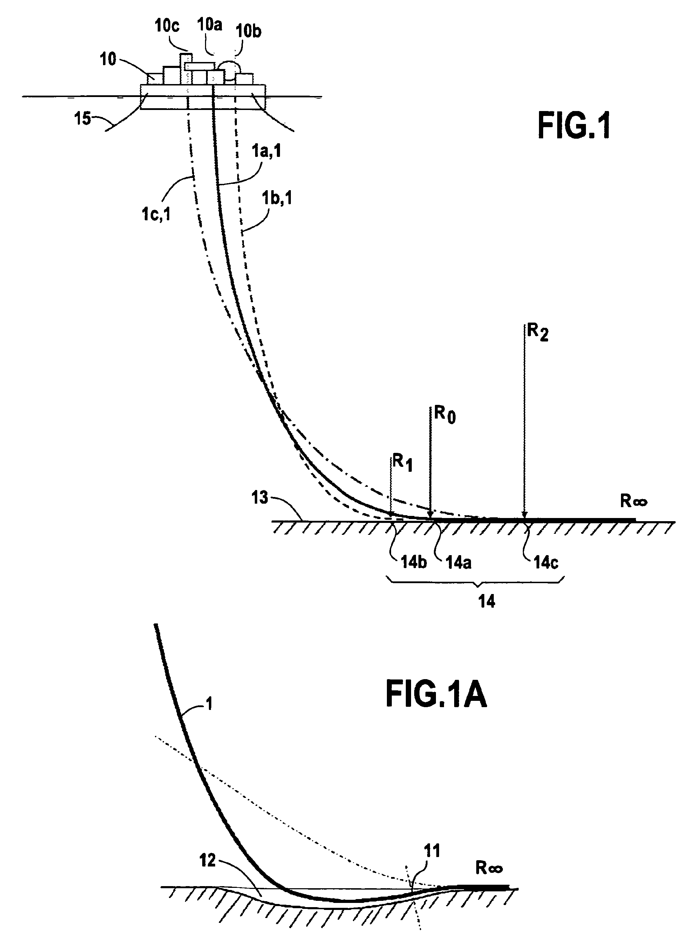

Dans la figure 1, on a représenté en vue de côté une liaison fond-surface 1, 1a, 1b, 1c, de type SCR, suspendue à un support flottant 10 de type FPSO ancré en 11, et reposant sur le fond de la mer 13 au niveau du point de contact 14a, 14b, 14c.
La courbure varie le long de la chaînette depuis la surface, ou son rayon a une valeur maximale, jusqu'au point de contact, où son rayon a une valeur minimale $R_0$,

$R_1$, $R_2$. Sous l'effet des vagues, du vent et du courant, le support flottant 10 se déplace, par exemple de gauche à droite comme représenté sur la figure, ce qui a pour effet de soulever ou de reposer la conduite en forme de chaînette, au niveau du fond de la mer. Dans la position 10c, le support flottant s'écarte de la position normale 10a, ce qui a pour effet de tendre la chaînette 1c en la soulevant, et de déplacer le point de contact 14 vers la droite de 14a en 14c; le rayon de courbure en pied de chaînette augmente de $R_0$ à $R_2$, de même que la tension horizontale dans la conduite engendrée au niveau dudit point de contact, et par conséquent que la tension dans la conduite au niveau dudit support flottant. De la même manière, dans la position 10b, le déplacement vers la droite du support flottant a pour effet de détendre la chaînette 1b et de reposer une partie de la conduite sur le fond de la mer. Le rayon $R_0$ au niveau du point de contact 14a décroît jusqu'à la valeur $R_1$, de même que la tension horizontale dans la conduite au même point, ainsi que la tension dans la conduite au niveau dudit support flottant. Cette réduction du rayon de courbure en 14b crée des contraintes internes considérables au sein de la structure de la conduite ce qui engendre des phénomènes de fatigue cumulés pouvant conduire à la ruine de la liaison fond-surface.

Ainsi, la conduite présente un rayon de courbure qui est maximal au sommet de la chaînette, c'est à dire au point de suspension sur le FPSO, et qui décroît jusqu'au point de contact 14 avec le sol 13. A cet endroit, le rayon de courbure est minimal dans la portion en suspension, mais dans la partie adjacente reposant sur le fond de la mer, ladite conduite étant théoriquement en ligne droite, son rayon de courbure est théoriquement infini. En fait ledit rayon n'est pas infini mais extrêmement élevé, car il persiste en général une courbure résiduelle.

Ainsi, comme expliqué précédemment, au gré des mouvements du support flottant en surface 10, le point de contact 14 se déplace de droite à gauche et, dans la zone soulevée ou reposée sur le fond, le rayon de courbure passe successivement d'une valeur minimale $R_{min}$ à une valeur extrêmement élevée, voire infinie dans le cas d'une configuration sensiblement en ligne droite.

Ces flexions alternatives créent des phénomènes de fatigue concentrés dans toute la zone de pied de chaînette et la durée de vie de telles conduites est fortement réduite et en général incompatible avec les durées de vie recherchées pour les liaisons fond-surface, c'est à dire 20-25 ans, voire plus.

De plus, comme illustré dans la figure 1A, on observe que durant ces mouvements alternatifs du point de contact, la raideur de la conduite, associée à la courbure résiduelle mentionnée précédemment, va dans le temps creuser un sillon 12 sur toute la longueur soulevée puis reposée, et créer ainsi une zone de transition dans laquelle existera un point d'inflexion 11, où la courbure change de sens dans les zones de transition, pour atteindre enfin une valeur infinie dans la portion de conduite sous-marine reposant en ligne droite sur le fond de la mer, ladite portion n'étant soulevée que de manière exceptionnelle, par exemple lors du cumul maximal dans la même direction, vers la gauche, de tous les éléments perturbateurs (houle-vent-courant) agissant sur le support flottant et sur la chaînette, ou encore lors de l'apparition de phénomènes de résonance au niveau de la chaînette elle-même. Lorsque la conduite se soulève, le point d'inflexion disparaît et les fibres précédemment en traction se retrouvent alors en compression ce qui crée une fatigue considérable dans cette portion de conduite. Ladite fatigue est alors d'un ou deux ordres supérieur à la fatigue en section courante où il n'y a pas de changement de la courbure, ce qui est incompatible avec une durée de vie recherchée de 25-30 ans voire plus.

Dans la figure 4D on a représenté une rame 2 comportant quatre éléments unitaires de conduite 2a-2d assemblés entre eux par soudages $2_2$, $2_3$ et $2_4$, réalisés en atelier. La première extrémité $2_1$ de ladite rame devant être soudée avec celle $2_5$ d'une conduite déjà assemblée en cours de pose, l'extrémité $2_5$ de la rame constituant la nouvelle extrémité $2_5$ de la conduite en cours de pose et étant prête à être assemblée à l'extrémité $2_1$ d'une rame suivante, à bord du navire de pose 8 de la figure 4A équipé d'une tour 9 de pose en J. A bord de ce navire, les rames sont stockées sur le pont à l'horizontale, puis elles sont relevées l'une après l'autre par une rampe pivotante 18 depuis une position horizontale jusqu'à être insérées dans la tour 9 de pose en J. La portion de conduite déjà posée 2P, non représentée figure 4A mais représentée figure 4B, est maintenue en tension au sein de la tour par une pince. Puis, une nouvelle rame 2N est descendue vers ladite conduite 2P maintenue en tension, comme détaillé sur la figure 4B, pour finalement être soudée, puis traitée par martelage selon l'invention, comme détaillé sur la figure 4C.

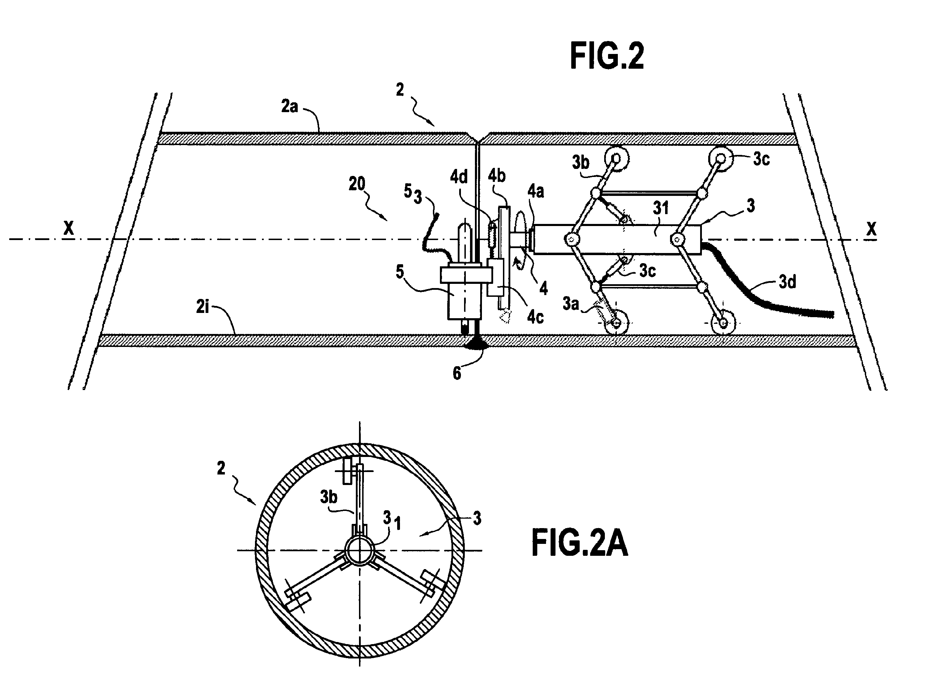

Sur la figure 2 on a représenté en coupe et en vue de côté deux éléments de conduites 2a-2b assemblés bout à bout par soudage 6 en atelier, la demi partie supérieure étant représentée en phase d'approche avant soudage. Lorsque le procédé de soudage est terminé et que le contrôle de la qualité dudit soudage a été effectué, depuis l'extrémité droite de la conduite de droite 2b, on introduit un dispositif commandé à distance ou robot 3 portant un outil de martelage 5 selon l'invention, de manière à venir positionner ledit outil de martelage à cheval sur ladite soudure 6, sensiblement à l'axe de cette dernière. Le robot 3 permet d'effectuer de manière automatique un traitement de martelage de la paroi interne et soudure sur un corridor 7 de largeur L, par exemple de largeur totale 2 à 6 cm, c'est-à-dire sensiblement de 1 à 3cm de part et d'autre du cordon de soudure 6.

Sur la figure 3, on a représenté en coupe, la face d'un élément de conduite usinée en vue de son assemblage par soudage à l'élément suivant. La face est usinée dans le plan perpendiculaire à l'axe XX de la conduite et présente, vers l'intérieur de la conduite, un talon 16 de quelques mm, en général 2 à 4 mm, puis un chanfrein 17, par exemple droit et conique tel que représenté, ou courbe et parabolique (non représenté).

Sur la figure 3A, on a mis face à face deux éléments de conduites prêts à être soudés. Lorsque les éléments de conduite présentent un niveau de qualité extrême, ou lorsqu'ils ont été réalésés de manière à présenter un diamètre circulaire parfait, les surfaces des parois intérieures desdits éléments de conduite sont sensiblement continues. Et lors du soudage (figure 3A, figure 3B-3B'), il en résulte une légère protubérance intérieure $6_2$ sensiblement uniforme sur la droite (2k) et la gauche (2h) ainsi que sur toute la périphérie, comme détaillé sur la figure 3B'.

Sur les figures 3E et 3F, on a mis en évidence les phénomènes redoutés précédemment décrits pour ce type de conduite soumise à la fatigue pendant une période pouvant excéder 25 à 30 ans. Lors du soudage effectué depuis l'extérieur par des robots de soudage orbitaux multi-têtes, la première passe doit être parfaitement fusionnée avec les talons respectifs 16 des deux extrémités des deux éléments de conduite 2a, 2b. A cet effet, les chanfreins 17 sont préparés comme représentés sur les figures 3 et 3A. C'est la fusion desdits talons qui crée une légère surépaisseur en forme de bourrelet ou protubérance de faible épaisseur $6_2$ (figure 3B) vers l'intérieur de la conduite, ladite surépaisseur étant sensiblement arrondie mais présentant une forme irrégulière sur la périphérie de la paroi intérieure de ladite conduite, et parfois un raccord anguleux au niveau du l'interface entre soudure et métal de base de la surface interne 2i des éléments de conduite.

En fait, en général, les éléments de conduite n'ont pas une section transversale interne parfaitement circulaire, mais celle-ci est légèrement ovalisée. De plus, l'épaisseur de la paroi peut varier sur la périphérie. Ainsi, lorsque l'on met face à face les extrémités des deux éléments de conduite à assembler, si par endroits de la périphérie, on retrouve l'alignement de la figure 3A, en certaines zones il existe un décalage tel que représenté sur la figure 3A'. Lors du processus de soudage, la protubérance $6_2$, sensiblement symétrique sur la figure 3B', présente alors un déséquilibre comme représenté sur la figure 3E. Ainsi, en 2h et 2k représentant respectivement la zone de transition entre la soudure elle-même et le métal de base des éléments de conduite 2a et 2b, il existe un angle $\alpha_1$, $\alpha_2$ entre la tangente à la protubérance et la surface interne 2i de la conduite, plus ou moins ouvert tel que représenté sur la figure 3E. En général, du côté en retrait vers l'intérieur, l'élément de conduite de gauche 2a, l'angle de raccordement $\alpha_1$ sera faible, alors que sur l'autre élément 2b, l'angle de raccordement $\alpha_2$ sera plus important et il pourra en résulter un angle vif.

C'est alors dans cette zone présentant des angles vifs $\alpha_2$, que risquent d'apparaître, sous l'effet de la fatigue, des amorces de fissuration, en général localisées, qui se propagent initialement dans la direction FF comme représenté sur la figure 3F, puis finalement sur toute la périphérie de la conduite, conduisant ainsi à la ruine de la soudure et donc de la liaison fond-surface.

Le processus de soudage met en jeu des puissances de chauffe et de fusion, donc des énergies considérables, car l'on cherche à minimiser le temps de cycle, surtout en ce qui concerne la soudure réalisée à bord du navire de pose 8, telle qu'explicitée précédemment en regard des figures 4A-4D. En effet, de tels navires d'installation ont un coût horaire d'exploitation extrêmement élevé, les opérations de soudage et de préparation constituant du temps d'occupation critique. On recherche des temps de cycle le processus de soudage de l'ordre de 10-12 minutes pour des conduites de 300 mm de diamètre et de 20 mm d'épaisseur. Les chocs thermiques localisés créés par la puissance des engins de soudage sont considérables et il en résulte des zones de concentration de contraintes résiduelles qui ne peuvent être traités de manière conventionnelle, notamment par recuit thermique, pour obtenir une relaxation des contraintes acceptables dans un laps de temps compatible avec les cadences de pose recherchées. Lesdites contraintes résiduelles peuvent être des contraintes de compression ou de traction, ces dernières étant les plus redoutées vis-à-vis de la tenue en fatigue pendant la durée de vie des installations qui excède 25-30 ans, voire plus.

Lors d'essais de fatigue réalisés sur des longueurs de conduites soumises à des simulations de fatigue correspondant à celles rencontrées lors de durée de vie de 25 à 50 ans, effectués sur un banc de fatigue, automatisé en termes de spectre de fréquence et d'amplitude des cycles alternés de contraintes, les inventeurs ont mis en évidence des phénomènes de fissuration localisée au niveau de l'interface entre le métal de base d'un élément de conduite et la zone de la soudure, principalement au niveau de la fusion des talons 16 et du bourrelet interne $6_2$ du cordon de soudure 6. En effet, en raison de phénomènes de trempe localisée, combinés à des irrégularités de fusion locale, il apparaît des points faibles dans lesquels la matière se trouve en état de contrainte résiduelle de traction à un niveau significatif, en général concomitamment à la présence d'un défaut physique localisé, tel un angle. A cet endroit précis vont alors apparaître rapidement lors des mouvements de la conduite, des amorces de fissuration en $2_k$ telles que représentés sur la figure 3F, ladite fissure se propageant alors rapidement de manière radiale et périphérique, en général selon une direction FF dans l'épaisseur de la paroi, conduisant ainsi rapidement à la ruine de la conduite et à des risques de pollution inacceptables.

Le dispositif de martelage 100 selon l'invention est constitué d'un outil de martelage 5 supporté par un premier chariot 3 à roulettes 3e motorisé par un moteur 3a, alimenté par un ombilical 3d. Les roues sont reliées à un corps principal axial $3_1$ du premier chariot, par un système de bras 3b montés en parallélogramme articulé, de préférence trois structures 3b de parallélogramme, portant chacune deux roues alignées dans la direction XX. Les trois structures de parallélogramme 3b sont de préférence uniformément réparties à 120° les uns des autres, comme représenté en coupe transversale sur la figure 2A, et actionnés de manière synchrone par des ressorts ou des vérins 3c, de manière à ce que le corps principal $3_1$ dudit robot reste sensiblement dans l'axe XX de ladite conduite. Le premier chariot ou robot 3 porte à l'avant un arbre axial 4, mobile en translation selon l'axe XX dans un canon de guidage 4a solidaire du corps principal $3_1$ le traversant axialement, qui est déplacé en translation selon ledit axe XX par un actionneur, non représenté, qui peut être par exemple un vérin ou un moteur électrique, de préférence asservi et piloté par un ordinateur, à travers l'ombilical 3d. De plus, ledit arbre 4 est mobile en rotation sur lui-même autour du même axe XX, au sein dudit canon de guidage 4a. Ladite rotation de l'arbre 4 est actionnée par un moteur électrique non représenté, intégré au corps principal $3_1$, et de préférence asservi et piloté par ledit ordinateur. A l'avant de l'arbre 4, un support de guidage 4b, solidaire dudit arbre maintient un second chariot 4c et le guide dans une direction perpendiculaire à l'axe XX et à la paroi interne 2i de la conduite 2. Ledit second chariot 4c supporte un outil de martelage 5 solidaire de ce dernier. Ledit outil de martelage est maintenu en contact intime avec la paroi interne 2i de la conduite 2, de préférence avec une force d'appui constante, par exemple au moyen d'un vérin pneumatique 4d, déplaçant ledit second chariot 4c dans une direction transversale. Ainsi, après que la soudure ait été réalisée et contrôlée, on insère par l'extrémité droite de la conduite 2b, ledit premier chariot ou robot 3 équipé du second chariot 4c portant l'outil de martelage 5 en position rétractée, de manière à ce que ledit outil de martelage n'interfère pas avec la surface interne de la paroi de conduite. Grâce à la motorisation 3a, on déplace le robot jusqu'à la soudure 6 à traiter, sous le contrôle d'une caméra vidéo 4e portée par le chariot 4c. Puis, on verrouille le chariot en position longitudinale en bloquant la motorisation 3a et en augmentant la pression dans les vérins 3c qui font pivoter les bras articulés 3b et bloquent les roues 3a contre la surface interne 2i de la paroi des conduits. Le corps principal se trouve alors sensiblement à l'axe XX de la conduite, et l'on ajuste la position de l'outil de martelage 5 en agissant sur la position de l'arbre 4 mobile en translation selon XX, toujours sous le contrôle de la caméra vidéo 4e. On actionne alors le vérin 4d de manière à déployer l'outil de martelage dans une direction transversale pour le plaquer contre la surface 2i de la paroi de ladite conduite. On actionne alors l'outil de martelage, tout en actionnant en rotation l'arbre 4 autour de son axe XX, de manière à soumettre l'intégralité de la périphérie du cordon de soudure interne, ainsi que des surfaces adjacentes internes 2i de chacun des éléments de conduite pour former un corridor martelé 7 en effectuant des passes circulaires successives, tout en décalant légèrement, en translation longitudinale, vers la gauche ou vers la droite, l'outil de martelage, en modifiant la position longitudinale de l'arbre 4, mobile en translation selon l'axe XX dans le canon de guidage 4a solidaire du bâti 3.

On utilise un outil de martelage 5 comprenant un unique marteau $5_1$ en acier trempé constitué d'un corps principal $5_5$ cylindrique à section polygonale ou circulaire de 6-20mm et de longueur de 30-100mm, et d'une protubérance à l'extrémité du dit corps principal formant une broche allongée, constituée par un élément d'une dureté extrême, par exemple en carbure de tungstène à grains fins, de forme convexe, définissant une surface de révolution parabolique (figure 5C),ou sphérique (figure 5D). Pour ces différentes formes de l'élément convexe $5_4$ en coupe longitudinale, celui-ci présente de préférence une section transversale circulaire et crée donc des cratères sensiblement circulaires. L'élément convexe $5_4$ présente une longueur selon Y1Y1 de 3 à 20mm et un diamètre en coupe transversale de 3 à 15mm. Le rayon de courbure de l'élément convexe $5_4$ à son extrémité selon l'axe longitudinal $Y_1Y_1$, c'est-à-dire au niveau du contact avec la surface martelée, est toujours inférieur à celui de la conduite, mais dans une version préférée de l'invention, il s'en rapproche le plus possible et en tout état de cause il est au moins supérieur à 1/2 voire 2/3 du rayon de courbure de la conduite.

L'extrémité du marteau vient alors frapper la surface à traiter et, lors des impacts, l'énergie cinétique dudit marteau est transformée en énergie de déformation plastique et élastique qui crée ou augmente le niveau de contrainte de compression du matériau à ce niveau en créant des cratères sensiblement circulaires.

Sur les figure 5A-5B et 5E, on a décrit plus précisément un chariot 4c équipé de son outil de martelage 5 commandé à distance à travers une liaison ombilicale $5_3$, comprenant une bobine solénoïde $5_6$ et un logement $5_7$ à travers laquelle et dans lequel coulisse selon l'axe $Y_1Y_1$ le corps principal cylindrique $5_5$ d'un marteau $5_1$ en matériau magnétique à très hautes performances, par exemple en alliage samarium-cobalt, pré-magnétisé de manière à présenter des pôles magnétiques Nord-Sud. Un tel moteur linéaire est connu de l'homme de l'art comme « bobine de haut-parleur », et présente des performances dynamiques optimales lorsqu'il est piloté par une électronique adaptée, connue de l'homme de l'art. Ledit pilotage est réalisé de préférence avec rebouclage de la position dudit marteau déterminée avec un capteur $5_9$. Le solénoïde est commandé par la carte électronique $5_{10}$ alimentée en énergie en $5_{11}$, et la position du marteau est mesurée en temps réel par le capteur $5_9$ grâce au déplacement de la tige $5_{13}$ solidaire du corps principal $5_5$, puis renvoyé $5_{12}$ à la carte électronique de contrôle. Le marteau $5_1$ est ainsi mis en mouvement alternatif dans la direction $Y_1Y_1$ de la manière suivante : le solénoïde est alimenté en courant continu de manière à ce que le corps principal cylindrique $5_5$ du marteau rentre dans son logement $5_7$, il comprime alors avantageusement un ressort $5_8$ qui absorbe ainsi une partie de l'énergie potentielle. Puis, en position haute ou rétractée du marteau telle que représentée sur la figure 5B, la tension électrique est inversée, ce qui a pour effet de soumettre le marteau à une force dirigée dans la direction opposée, c'est-à-dire vers la paroi de la conduite, avec une accélération importante sous l'effet additionnel de l'énergie potentielle mécanique du ressort $5_8$. Le marteau acquiert ainsi une vitesse élevée, donc une énergie cinétique importante qui est transférée à la paroi de la conduite, dès que le marteau entre en contact avec ladite paroi, effectuant ainsi un martelage localisé de la zone à traiter, comme représenté sur la figure 5A. La tension électrique est alors de nouveau inversée pour rétracter le marteau en vue d'effectuer un nouveau cycle de martelage, soit exactement dans la même position, donc au même endroit, soit en une position légèrement décalée par rotation de la tête 4 autour de l'axe XX ou translation dans la direction XX. Les mouvements alternés du marteau seront avantageusement effectués à une fréquence de 5 à 250 Hz, notamment de 1 à 100Hz, tout en déplaçant avantageusement de manière régulière l'outil de martelage et donc la zone d'impact, en rotation autour de l'axe XX et en translation selon l'axe XX, de manière à couvrir de manière sensiblement uniforme l'intégralité du corridor correspondant à la zone traitée 7, de façon à obtenir une zone entièrement recouverte de dits cratères adjacents voire se chevauchant.

Dans une version préférée de l'invention, la trajectoire du marteau est contrôlée en temps réel par des moyens de commande numérique connus de l'homme de l'art. Ainsi, à chaque instant, la position du marteau, sa vitesse et son accélération sont connues et maîtrisées, et l'énergie transférée lors du choc avec la paroi de la conduite est avantageusement maintenue stable et répétitive pendant toute la séquence, les paramètres de réglage étant avantageusement modifiés selon la position du marteau. En effet, lorsque le marteau frappe vers le bas comme représenté sur les figures 5A-5B, l'action de la pesanteur sur le marteau vient s'ajouter à l'accélération fournie par l'électronique de commande ; En revanche, lorsque le marteau frappe en plafond, c'est à dire vers le haut, l'accélération de la pesanteur se retranche de l'accélération fournie par l'électronique de commande. L'utilisation d'un système de commande numérique permet ainsi, en contrôlant en temps réel les paramètres de trajectoire du marteau, de transférer une énergie sensiblement constante durant tout le traitement de la paroi, quelque soit l'orientation du marteau par rapport à la verticale.

Sur les figures 5C-5D, on a représenté en vue de côté l'extrémité percutante du marteau présentant une courbure parabolique forte (5C) c'est-à-dire avec un rayon de courbure faible et en 5D une courbure sphérique faible c'est-à-dire avec un rayon de courbure important, se rapprochant de la courbure interne de la conduite. Le diamètre et la profondeur de la zone impactée à chaque coup du marteau dépendent de l'énergie transmise, de la qualité de l'acier de base de la conduite, du rayon de courbure dudit marteau et du rayon de courbure interne de ladite conduite.

Sur la figure 5E, on a représenté un outil de martelage 5 qui pivote autour de l'axe 4f du support 4g solidaire du chariot 4c. L'axe $Y_1Y_1$ du marteau $5_1$, qui correspond également à la direction de projection dudit marteau $5_1$ contre la surface à marteler, est incliné d'un angle β par rapport à ladite direction de translation radiale du chariot 4c (YY) de manière à atteindre, dans les meilleures conditions, les zones de transition 2h-2k telles que décrites ci-dessus en référence au figures 3B' et 3F, c'est-à-dire sensiblement le plus proche de la direction perpendiculaire à la surface du bourrelet dans lesdites zones. Ceci permet d'insister sur ces zones de transition 2h-2k sujettes à l'apparition des fissurations redoutées. Ainsi, on utilisera avantageusement un premier outil de martelage tel que décrit en regard de la figure 5 pour effectuer un martelage général. Puis, on insistera sur chacune des zones de transition 2h-2k au moyen, soit dudit outil de martelage 5 en position inclinée d'un angle β par exemple de 30 à 60° par rapport à la direction perpendiculaire à la surface interne de la conduite, pour marteler dans un premier temps la zone de transition 2h, puis dans un deuxième temps, ledit outil de martelage 5 étant en position inclinée d'un angle -β, pour marteler la zone de transition 2k. Avantageusement, deux outils de martelage 5 sont installés sur un même chariot 4c, ou sur des chariots indépendants solidaires du même arbre axial 4, l'un étant incliné d'un angle β, le second étant incliné d'un angle -β.

Ce martelage permet de déformer localement et sur une épaisseur contrôlée en fonction de l'énergie cinétique transmise par le marteau, le métal de la soudure et le métal de base de l'extrémité de chacun des éléments de conduite. Cette déformation plastique du métal permet d'établir un état généralisé et sensiblement homogène de contrainte de compression dans toute la zone traitée 7, ce qui a pour effet de résorber les états localisés de contraintes résiduelles de traction résultant du processus de soudage et de phénomènes de trempe localisés indésirables précédemment décrits.

La mise en compression dépend de la puissance et de la précision du processus de martelage, et elle est effectuée en général sur une épaisseur variant de 0.2 à 2 mm, ce qui empêche avantageusement l'apparition des amorces de fissuration redoutées.

On améliore avantageusement la qualité de la conduite dans la zone de la soudure dès lors que l'on effectue avant le martelage, un meulage interne $6_3$ de la soudure, de manière à supprimer les défauts géométriques de surface, de manière à pouvoir réaliser le martelage sur une surface interne de conduite et soudure sensiblement cylindrique à ce niveau. Ledit meulage est avantageusement effectué à l'aide d'un outil de meulage 19 tel que représenté sur la figure 6, monté sur un dispositif similaire audit outil de martelage décrit ci-dessus, mais dans lequel l'outil de martelage a été remplacé par un outil de meulage 19. L'outil de meulage 19 comprend une meule rotative $19_1$ montée sur un dit second chariot 4c, et qui peut donc être déplacée en translation dans la direction transversale YY, de sorte que la meule rotative $19_1$ vienne en appui contre la surface interne de la conduite et de la soudure à meuler. Au moins une roulette 20 est montée solidaire de l'outil de meulage 19, à coté de celui-ci, de manière à ce qu'elle serve de guide pour assurer le maintien de la meule rotative $19_1$ lorsque celle-ci vient en appui sur ladite surface interne de conduite, c'est-à-dire de manière à ce que ladite meule rotative $19_1$ reste bien tangentielle à l'alésage de la conduite, enlevant de ce fait juste la quantité nécessaire de protubérance $6_2$ du cordon de soudure 6, comme représenté sur les figures 3C-3C'.

Sur la figure 6, on a représenté une meule rotative $19_1$ de forme cylindrique d'axe de rotation $X_1X_1$, s'étendant dans la direction longitudinale parallèle à la direction longitudinale axiale XX de la conduite, la surface abrasive de la meule correspondant à sa surface externe cylindrique. Dans un mode de réalisation, la meule rotative cylindrique peut s'étendre dans la direction $X_1X_1$ d'une dite distance L. De même, la roulette 20 présente un axe de rotation $X_2X_2$ dans la direction longitudinale parallèle aux axes XX et $X_1X_1$, de sorte que la roulette 20 et la meule rotative $19_1$ présentent une même tangente $X_3X_3$ la plus proche de la surface interne 2i de la conduite, ce qui permet que la roulette 20 puisse guider l'outil de meulage en maintenant son axe $X_1X_1$ tangentiellement à l'alésage 2i de la conduite, comme décrit ci-dessus.

Sur la figure 3D, on a représenté l'état de la surface intérieure de la conduite dans la zone de la surface interne martelée 7 de la soudure, sur une largeur L.

Lors de la préfabrication à terre des rames 2 telles que représentées sur la figure 4D, la longueur des éléments unitaires 2a-2d sont de 6 à 12m environ, ce qui nécessite d'introduire le robot de martelage par l'extrémité la plus proche de la soudure à traiter, c'est-à-dire à une distance de 6 à 12 m environ selon les cas, puis de faire cheminer le robot sur cette distance pour venir le positionner avec précision à cheval sur ladite soudure à traiter.

Dans le cas de l'installation sur site, les rames préfabriquées ont en général une longueur de 50 m environ comme représenté sur la figure 4D, voire dans certains cas de 25m ou de 100m, et il est alors nécessaire de faire cheminer le robot sur cette distance, pour qu'il puisse atteindre la zone de la soudure à traiter.

Sur les figures 4A-4C, on a représenté l'assemblage entre deux rames ainsi que le traitement de la zone de soudure par martelage, lors de l'installation sur site qui est effectuée à bord d'un navire de pose 8 équipé d'une tour de pose en J 9, tel que représenté sur la figure 4A. A cet effet, l'élément de conduite déjà posé 2P est maintenu fixement en suspension en pied de tour, et un nouvel élément de conduite 2N est transféré à l'aide d'une rampe 15 pivotante, de manière connue, de la position horizontale à la position oblique correspondant à l'inclinaison de la tour pour être ensuite positionné dans l'axe de l'élément de conduite terminal en suspension. Ledit élément de conduite à assembler 2N est ensuite déplacé axialement selon la direction XX vers l'élément de conduite terminal 2P en suspension, comme représenté sur la figure 4B, puis soudé de manière connue. Depuis l'extrémité supérieure de la tour, on introduit à l'intérieur de la conduite le robot de martelage 3 que l'on laisse descendre jusqu'à la zone de la soudure, située 50 m en contrebas dans le cas de rames de 50 m, comme explicité sur la figure 4C, puis on effectue le martelage d'un corridor 7, de manière similaire au traitement effectué en atelier comme précédemment décrit. En fin de traitement, on remonte le robot de martelage vers le sommet de la tour 9, puis l'on saisit l'extrémité supérieure de la conduite, que l'on redescend vers le bas de la tour pour effectuer un nouveau cycle d'assemblage et de traitement d'une nouvelle rame de conduite.

En atelier, comme à bord du navire d'installation, en fin de traitement de la zone la soudure par martelage, on effectue avantageusement un contrôle de l'état de contraintes de la zone traitée, de manière à mettre en évidence la suppression des états de contraintes de traction et leur substitution par des états de contrainte de compression. Le moyen ce contrôle le plus approprié est la méthode par rayons X qui permet de mesurer les distances inter atomiques au niveau de la surface de la matière, et ainsi de caractériser de manière très précise l'état et le niveau de contrainte, qu'il soit de traction, de repos, ou de compression. De tels moyens sont mis en oeuvre au moyen d'un robot similaire à celui décrit précédemment, l'outil de martelage 5 étant remplacé par la source de rayons X et les capteurs associés disponibles auprès de la Société STRESSTECH (Finlande). Les signaux récupérés par les capteurs sont alors envoyés vers une unité de traitement du signal, par exemple un ordinateur, qui en déduira le niveau de contrainte réel existant après, et le cas échéant avant, le traitement par martelage de ladite zone de soudage.

La présente invention a été décrite principalement pour résoudre le problème lié aux liaisons fond-surface et plus particulièrement au niveau de la zone du point de contact avec le fond marin, d'une liaison de type SCR. Mais, l'invention s'applique à tout type de conduite sous-marine, qu'elle repose sur le fond de la mer, qu'elle soit intégrée à une tour verticale, ou encore qu'elle constitue une liaison en subsurface entre deux FPSO, ou entre un FPSO et une bouée de déchargement.

Les divers types de liaison subsurface sont décrits dans le brevet FR 05/04848 de la demanderesse, plus particulièrement dans les figures 1A-1D et 2A. Lesdites liaisons subsurface sont tout particulièrement sujettes aux phénomènes de fatigue lorsqu'elles sont soumises à la houle et aux courants et surtout aux mouvements des supports flottants, FPSO et bouée de chargement, qui engendrent des contraintes alternées surtout dans la zone proche desdits supports flottants.

L'outil de martelage 5 a été décrit en détails sur la base d'un actionneur constitué par un actionneur linéaire de type « voice coil motor », ou d'un moteur linéaire tel le « PowerRod Actuator PRA25 » de la Société Parker Hannifin GmbH, permettant de contrôler avec précision l'énergie cinétique transmise au marteau, donc l'énergie de martelage. L'outil de martelage 5 qui a été décrit ne comporte qu'un marteau unique, mais on juxtapose avantageusement plusieurs outils de martelage à marteau unique actionnable indépendamment de préférence sur le même arbre 4, les dits outils étant avantageusement répartis de manière régulière sur la circonférence de la conduite et éventuellement légèrement décalés les uns par rapport aux autres selon l'axe XX, de manière à ce que lors des rotations desdits outils autour de l'axe XX, la zone à traiter 7 soit traitée de manière sensiblement uniforme dans un temps plus réduit.

Quel que soit le diamètre intérieur de la conduite, l'énergie à transmettre par l'outil de martelage est sensiblement la même et dépend essentiellement de la dureté du métal de la conduite et de la forme de l'extrémité du marteau. Le périmètre à traiter est fonction du diamètre intérieur de la conduite, et le temps de traitement avec un outil unique croit donc en fonction dudit diamètre. Ainsi, on installe avantageusement, de préférence répartis en étoile sur la circonférence, un grand nombre d'outils actionnables en martelage indépendamment les uns des autres pour les grands diamètres, par exemple 6, 12 ou 24 outils de martelage pour les conduites de diamètre 500 à 600mm, car on dispose de suffisamment de place pour qu'ils n'interfèrent pas entre eux. Pour les petits diamètres 150-200m on ne pourra installer que deux ou trois dits outils de martelage disposés en étoile, en raison du peu de place disponible. Avantageusement la majorité des outils multiples seront disposés perpendiculairement à la paroi, mais certains étant inclinés respectivement d'un angle β et -β comme expliqué précédemment en vue de traiter de manière approfondie les zones de transition 2h-2k. La figure 7 est une vue de côté d'une tête avec un dit premier arbre 4 du même chariot robot 3 équipée de deux deuxièmes chariots 4c diamétralement opposés portant deux outils de martelage 5 diamétralement opposés avec un léger décalage selon l'axe XX. La figure 7A est une vue de face d'un plateau portant cette fois quatre outils de martelage uniformément répartis sur la circonférence. Dans ce cas, lesdits outils sont disposés de préférence deux à deux en opposition, sur deux supports de guidage transversal 4b décalés à 90° et supportant chacun deux dits deuxièmes chariots déplaçables radialement indépendamment l'un de l'autre, de préférence les deux supports de guidage transversal 4b étant avec un léger décalage en translation selon l'axe XX.

## Revendications

1. Dispositif de martelage (100) utile pour la réalisation d'un martelage à l'intérieur de conduites sous marines (1) en acier assemblées par soudage annulaire des extrémités bout à bout d'éléments de conduite unitaires (2a-2b), les cordons de soudure étant réalisés à l'extérieur de la conduite, ledit dispositif comprenant au moins un outil de martelage (5) apte à se déplacer en translation longitudinale axiale (XX) dans la direction axiale de la conduite et en rotation autour dudit axe longitudinal axial (XX) de la conduite au niveau desdites soudures (6) à l'intérieur de la conduite, le dit dispositif de martelage (100) comprenant au moins un marteau comprenant :

- un corps principal ($5_5$) constituant une massette de forme allongée selon une direction longitudinale de translation alternative relative (Y1Y1) du dit marteau par rapport à l'outil de martelage et à la surface interne de la conduite et à la soudure à marteler, et
- un élément bombé ($5_4$) de courbure de forme convexe à l'extrémité de la dite massette et solidaire de celle-ci, le dit élément bombé étant apte à rentrer en contact avec ladite surface à marteler créant ainsi des impacts sous forme de cratères sous l'effet de l'énergie cinétique du dit marteau lorsque celui-ci est actionné en martelage par dites translations alternatives radiales,

**caractérisé en ce que** :

a) ledit outil de martelage (5) comprend un unique marteau, et
b) le dit marteau est monté à pivotement de manière à pouvoir faire varier l'inclinaison de la dite massette de forme allongée et de la dite direction de translation alternative relative (Y1Y1) du dit marteau par rapport à la direction radiale (YY), et
c) ledit dispositif (100) comprend :

- un premier chariot (3) apte à se déplacer en translation longitudinale axiale (XX) à l'intérieur d'une conduite,
- le dit premier chariot supportant des moyens de déplacements dudit outil de martelage en translation longitudinale axiale (XX) relative par rapport audit premier chariot, et
- ledit premier chariot supportant des moyens de rotation relative dudit outil de martelage par rapport au dit premier chariot, autour dudit axe longitudinal axial (XX) de la conduite, et
- ledit premier chariot supportant des moyens de déplacement dudit outil de martelage (5) en translation radiale (YY) relative par rapport audit premier chariot, et

d) le dit outil de martelage comprend des moyens d'actionnement en martelage par dites translations alternatives radiales, par mise en oeuvre d'une énergie électro magnétique, le marteau comprenant un dit corps principal ($5_5$)

en matériau magnétique apte à se déplacer alternativement dans les deux sens à l'intérieur d'une bobine solénoïde fixe ($5_6$) selon la direction axiale dudit solénoïde correspondant à la dite direction longitudinale dudit marteau ($Y_1Y_1$), sous l'effet d'un champs magnétique créé à l'intérieur du solénoïde lorsque ledit solénoïde est alimenté en courant électrique continu de manière alternée respectivement dans les deux sens, ledit corps principal coopérant en outre de préférence avec un ressort ($5_8$).

2. Dispositif selon la revendication 1 **caractérisé en ce que** l'alimentation électrique du solénoïde est pilotée par une commande numérique permettant d'adapter l'énergie de martelage, en fonction de la position du marteau déterminée avec un capteur ($5_9$).

3. Dispositif selon la revendication 1 ou 2 **caractérisé en ce que**

- ledit premier chariot est motorisé (3) et supporte un premier arbre (4), disposé à l'intérieur de la conduite dans ladite direction longitudinale axiale (XX) de la conduite, et
- ledit premier arbre (4) supporte au moins des moyens ou support de guidage transversal (4b) de préférence en forme de poutre, aptes à guider le déplacement d'au moins un deuxième chariot (4c) en translation radiale (YY) dans une direction transversale perpendiculaire à ladite direction longitudinale axiale (XX), ledit deuxième chariot supportant ledit outil de martelage et le dit deuxième chariot comprenant de préférence un moyen (4d) apte à maintenir ledit outil de martelage (5) en position en regard de la surface interne (2i) de ladite conduite, et
- ledit premier arbre (4) comprend un moyen d'entraînement en rotation contrôlée sur lui-même autour de son dit axe longitudinal axial (XX), de manière à pouvoir déplacer en dite rotation relative ledit support de guidage transversal radial (4b) et ledit outil de martelage (5) sur toute la circonférence de la surface interne (2i) de la conduite, et
- ledit premier arbre (4) est, de préférence, apte à être entraîné en translation relative par rapport audit premier chariot (3) dans ladite direction longitudinale axiale (XX) de la conduite, sur au moins une distance limitée L.

4. Dispositif selon l'une des revendications 1 à 3 **caractérisé en ce que** le dit premier chariot (3) est motorisé par un moteur (3a) alimenté depuis l'extérieur de la conduite par un ombilical (3d), et ledit premier chariot comprend des roulettes (3e) appliquées contre la surface interne de la conduite et guidant le déplacement en dite translation longitudinale axiale dudit premier chariot à l'intérieur de la conduite , les dites roulettes étant reliées à un corps principal axial ($3_1$) du premier chariot, par un système de bras (3b) montés en parallélogrammes articulés.

5. Dispositif selon la revendication 4 **caractérisé en ce que** ledit système de bras (3b) montés en parallélogrammes articulés comprend trois structures (3b) de parallélogramme, portant chacune deux roulettes alignées dans la direction axiale XX de la conduite, les trois structures de parallélogramme (3b) étant de préférence uniformément réparties à 120° les uns des autres, et actionnés de manière synchrone par des ressorts ou des vérins 3c, de manière à ce que le corps principal $3_1$ dudit premier chariot reste sensiblement dans l'axe XX de ladite conduite.

6. Dispositif selon l'une des revendications 1 à 5, **caractérisé en ce que** ledit élément convexe ($5_4$) est de révolution de forme de section sphérique, ovoïde ou parabolique, de préférence sphérique, réalisé dans un acier ou carbure métallique de plus grande dureté que ledit corps principal ($5_5$) du marteau et ledit élément convexe présente une dimension en section transversale réduite, notamment un diamètre réduit par rapport au dit corps principal du marteau.

7. Dispositif selon l'une des revendications 1 à 5, **caractérisé en ce qu'**il comprend une pluralité d'outils de martelage comprenant chacun un unique dit marteau, chaque outil de martelage étant apte à être déplacé indépendamment et chaque marteau étant apte à être commandé en martelage indépendamment.

8. Dispositif selon la revendication 7, **caractérisé en ce qu'**il comprend 2 outils de martelage, ledit premier arbre (4) supportant deux dits deuxièmes chariots supportant chacun un dit outil de martelage sur un même dit support de guidage transversal (4b).

9. Dispositif selon la revendication 7, **caractérisé en ce qu'**il comprend 4 outils de martelage, ledit premier arbre (4) supportant deux dits supports de guidage transversal (4b) décalés dans la direction longitudinale et en rotation, chacun des dits supports de guidage étant apte à guider le déplacement de deux dits deuxièmes chariots (4c) en translation radiale supportant chacun un unique dit outil de martelage.

10. Procédé de réalisation de conduites sous marines (1) en acier comprenant l'assemblage par soudage des extrémités bout à bout d'éléments de conduite unitaires (2a-2b), les cordons de soudure en acier ou alliage métallique desdits soudage étant disposés à l'extérieur de la conduite, **caractérisé en ce que** on réalise un martelage localisé à l'intérieur de la conduite pour augmenter la compression de l'acier ou métal au niveau desdites soudures (6, $6_2$) et sur la surface interne (2i) périphérique de la conduite adjacente, de part et d'autre des soudures (6), de manière à créer un corridor (7) de surface martelée sur une distance L limitée dans la direction longitudinale axiale (XX) de ladite conduite, de préférence une distance L au moins égale à la largeur de la soudure, à l'intérieur de la conduite augmentée de part et d'autre d'une largeur de 1 à 10 mm, le dit martelage étant réalisé en créant une pluralité d'impacts , de préférence en forme de cratères adjacents recouvrant toute la surface du dit corridor, avec un dispositif de martelage selon l'une des revendications 1 à 9.

11. Procédé selon la revendication 10 **caractérisé en ce que** la soudure (6) comprend un cordon de soudure principale ($6_1$) à l'extérieur de la conduite et une protubérance ou bourrelet interne ($6_2$) d'épaisseur moindre dépassant du coté de l'intérieur de la conduite, et on réalise ledit martelage au moins dans la zone de transition (2h, 2k) entre la surface interne ($6_2$, $6_3$) du dit bourrelet ($6_2$ au dos du cordon de soudure) et la surface interne (2i) adjacente de la conduite, en faisant varier l'inclinaison ($\beta$) de la direction longitudinale et de translation du dit marteau ($Y_1$, $Y_1$) par rapport à ladite direction de translation radiale dudit deuxième chariot (YY).

12. Procédé selon l'une des revendications 10 ou 11 **caractérisé en ce que** l'on réalise un enlèvement de matière par meulage ou fraisage préalable de la surface interne de la conduite et du cordon de soudure (6, $6_2$) au niveau de la surface à marteler, avant ledit martelage.

13. Procédé selon l'une des revendications 10 à 12, **caractérisé en ce que** l'on réalise ledit martelage de manière à réaliser la mise en compression ou augmenter la compression sur une épaisseur de 0,2 à 2 mm de ladite surface interne (2i) de la conduite et de ladite soudure (6).

14. Procédé selon l'une des revendications 10 à 13, **caractérisé en ce que** la distance limitée L représente 1 à 3 fois l'épaisseur de la conduite.

15. Procédé selon l'une des revendications 10 à 14, **caractérisé en ce que** l'on réalise un martelage de manière à obtenir une contrainte de compression supérieure à 5 MPa, de préférence supérieure à 50 MPa, sur toute la surface martelée.

16. Procédé selon l'une des revendications 10 à 15, **caractérisé en ce que** :

- on déplace en translation ledit premier chariot (3) à l'intérieur de ladite conduite dans ladite direction longitudinale axiale (XX), de sorte que ledit outil de martelage (5) soit sensiblement positionné de manière à ce que celui-ci puisse réaliser un martelage dans ladite zone de soudure et de part et d'autre de celle-ci, dans ladite direction axiale longitudinale (XX), sur une dite distance à marteler L, chevauchant ladite soudure, puis

- on déplace ledit outil de martelage contre ou à proximité de la surface interne de la conduite par translation radiale (YY) dudit outil de martelage, puis

- on déplace en rotation ledit outil de martelage autour dudit axe longitudinal axial (XX), sur la circonférence de la surface interne de conduite, puis

- le cas échéant, on déplace en translation relative l'outil de martelage dans la direction longitudinale axiale (XX) par rapport audit premier chariot, de façon à effectuer le martelage et la compression sur toute la surface martelée.

17. Procédé selon l'une des revendications 10 à 16, **caractérisé en ce qu'**il comprend les étapes suivantes successives, dans lesquelles :

■ on réalise, en atelier à terre, l'assemblage par dit soudage ($2_2$, $2_3$, $2_4$) des extrémités respectives d'au moins deux éléments unitaires de conduite (2a-2b), mis bout à bout pour former des rames (2) de conduite, et

■ on réalise en mer, à partir d'un navire de pose (8) équipé d'une tour de pose en J (9), l'assemblage par dit soudage des extrémités ($2_1$, $2_5$) respectives desdites rames pour former une conduite.

**Claims**

1. A peening device (100) suitable for peening the insides of undersea pipes (1) made of steel assembled by annular welding of abutting ends of unitary pipe elements (2a-2b), the weld beads being made from the outside of the pipe, said device comprising at least one peening tool (5) suitable for moving in longitudinal axial translation XX in the axial direction of the pipe, and in rotation about said axial longitudinal axis XX of the pipe in the vicinity of said welds (6) inside the pipe, said peening device (100) having at least one hammer comprising:

• a main body ($5_5$) constituting a flyweight of elongate shape in a longitudinal direction Y1Y1 for reciprocating movement in translation of said hammer relative to the peening tool and relative to the inside surface of the pipe and the weld for peening; and

• a rounded element (5₄) of curvature of convex shape at the end of said flyweight and secured thereto, said rounded element being suitable for coming into contact with said surface for peening, thereby creating impacts in the form of craters under the effect of the kinetic energy of said hammer when it is actuated for peening by performing said reciprocating movements in translation in the radial direction;

the device being **characterized in that**:

a) said peening tool (5) has a single hammer; and

b) said hammer is pivotally mounted so as to be capable of varying the angle of inclination of said elongate flyweight and of varying said direction Y1Y1 of relative reciprocating movement in translation of said hammer relative to the radial direction YY; and

c) said device (100) comprises:

• a first carriage (3) suitable for moving in axial longitudinal translation XX inside a pipe; and

• said first carriage supporting means for moving said peening tool in relative axial longitudinal translation XX relative to said first carriage; and

• said first carriage supporting means for implementing relative rotation of said peening tool relative to said first carriage about said axial longitudinal axis XX of the pipe; and

• said first carriage supporting means for moving said peening tool (5) in said radial movement YY relative to said first carriage; and

d) said peening tool includes means for actuating peening by said radial reciprocating movement in translation by implementing electromagnetic energy, the hammer comprising a said main body (5₅) made of magnetic material suitable for reciprocating in both directions inside a stationary solenoid coil (5₆) along the axial direction of said solenoid corresponding to said longitudinal direction Y1Y1 of said hammer under the effect of a magnetic field created inside the solenoid when said solenoid is powered with DC alternately in both directions, said main body also preferably co-operating with a spring (5₈).

2. A device according to claim 1, **characterized in that** the electrical power supply of the solenoid is controlled by a digital control circuit enabling the peening energy to be adapted as a function of the position of the hammer as determined by a sensor (5₉).

3. A device according to claim 1 or claim 2, **characterized in that**:

• said first carriage (3) is motor driven and supports a first shaft (4) disposed inside the pipe in said axial longitudinal direction XX of the pipe; and

• said first shaft (4) supports at least transverse guidance support or means (4b) preferably in the form of a beam, suitable for guiding the movement of at least one second carriage (4c) in radial translation in a transverse direction perpendicular to said axial longitudinal direction XX, said second carriage supporting said peening tool and said second carriage preferably including means (4d) suitable for maintaining said peening tool (5) in a position facing the inside surface (2i) of said pipe; and

• said first shaft (4) includes drive means for causing it to perform controlled rotation about its own said axial longitudinal axis XX so as to be capable of moving said radial transverse guide support (4b) and said peening tool (5) in relative rotation over the entire circumference of the inside surface (2i) of the pipe; and

• said first shaft (4) is preferably suitable for being driven in relative translation relative to said first carriage (3) in said axial longitudinal direction XX of the pipe, at least over a limited distance L.

4. A device according to any one of claims 1 to 3, **characterized in that** said first carriage (3) is driven by a motor (3a) powered from outside the pipe by an umbilical connection (3d), and said first carriage has wheels (3e) pressed against the inside surface of the pipe and guiding said axial longitudinal movement in translation of said first carriage inside the pipe, said wheels being connected to an axial main body (3₁) of the first carriage by a system of arms (3b) mounted as hinged parallelograms.

5. A device according to claim 4, **characterized in that** said system of arms (3b) mounted as hinged parallelograms comprises three parallelogram structures (3b), each carrying two wheels in alignment on the axial direction XX of the pipe, the three parallelogram structures (3b) preferably being distributed uniformly at 120° from one another, and being actuated synchronously by springs or actuators (3c) so that the main body (3₁) of said first carriage remains substantially on the axis XX of said pipe.

6. A device according to any one of claims 1 to 5, **characterized in that** said convex element (5₄) is a body of revolution with section of spherical, oval, or parabolic shape, preferably spherical, made of a steel or metallic carbide of greater hardness than said main body ($5_5$) of the hammer, and said convex element presents a small dimension in cross-section, in particular a diameter that is small relative to said main body of the hammer.

7. A device according to any one of claims 1 to 5, **characterized in that** it has a plurality of peening tools, each comprising a single said hammer, each peening tool being suitable for being moved independently, and each hammer being suitable for being controlled to perform peening independently.

8. A device according to claim 7, **characterized in that** it has two peening tools, said first shaft (4) supporting two said second carriages each supporting one said peening tool on a common said transverse guidance support (4b).

9. A device according to claim 7, **characterized in that** it has four peening tools, said first shaft (4) supporting two said transverse guidance supports (4b) offset in the longitudinal and rotary directions, each of said guidance supports being suitable for guiding the movement of two said second carriages (4c) in radial translation, each carriage supporting a single said peening tool.

10. A method of making undersea steel pipes (1), the method comprising assembling unit pipe elements (2a-2b) by end-to-end butt welding, the weld beads of steel or metal alloy of said welds being disposed on the outside of the pipe, the method being **characterized in that** localized peening is performed inside the pipe to increase the compression of the steel or the metal at said welds (6, $6_2$) and on the adjacent peripheral inside surface (2i) of the pipe on either side of the welds (6) so as to create a swath (7) of peened surface over a limited distance L in the axial longitudinal direction XX of said pipe, preferably a distance L that is not less than the width of the weld, inside the pipe, plus on either side a width lying in the range 1 mm to 10 mm, said peening being performed by creating a plurality of impacts, preferably in the form of adjacent overlapping craters covering the entire surface of said swath, with a device according to any one of claims 1 to 9.

11. A method according to claim 10, **characterized in that** the weld (6) comprises a main weld bead ($6_1$) outside the pipe and an internal projection or seam ($6_2$) of smaller thickness projecting from the inside of the pipe, and said peening is performed at least in the transition zone (2h, 2k) between the inside surface ($6_2$, $6_3$) of said seam ($6_2$) at the back of the weld bead and the adjacent inside surface (2i) of the pipe, by varying the angle of inclination β of the longitudinal direction Y1Y1 of movement in translation of said hammer relative to said direction YY of movement in radial translation of said second carriage.

12. A method according to claim 10 or claim 11, **characterized in that** material is removed by prior grinding or milling of the inside surface of the pipe and of the weld bead (6, $6_2$) over the surface for peening, prior to said peening.

13. A method according to any one of claims 10 to 12, **characterized in that** said peening is performed in such a manner as to establish compression or increase compression over a thickness of 0.2 mm to 2 mm in said inside surface (2i) of the pipe and of said weld (6).

14. A method to any one of claims 10 to 13, **characterized in that in that** the limited distance L represents one to three times the thickness of the pipe.

15. A method according to any one of claims 10 to 14, **characterized in that** peening is performed in such a manner as to obtain a compression stress greater that 5 MPa, preferably greater than 50 MPa, over the entire peened surface.

16. A method according to any one of claims 10 to 15, **characterized in that**:

   • said first carriage (3) is moved in translation inside said pipe in said longitudinal axial direction XX, such that said peening tool (5) is substantially positioned so as to be capable of performing peening in said weld zone and on either side thereof over a said distance L for peening astride said weld in said longitudinal axial direction XX; then
   • said peening tool is moved against or close to the inside surface of the pipe by moving said peening tool in radial translation YY; then
   • said peening tool is moved in rotation about said axial longitudinal axis XX over the circumference of the inside surface of the pipe; and then
   • where appropriate, the peening tool is moved in relative translation in the axial longitudinal direction XX relative to said first carriage so as to perform the peening and compression over the entire peened surface.

17. A method according to any one of claims 10 to 16, **characterized in that** it comprises the following successive steps:

   1) in a workshop on land, assembling the respective ends of at least two unit pipe elements (2a-2b) together end-to-end by said welding ($2_2$,

$2_3$, $2_4$), in order to form pipe strings (2); and
2) at sea, on board a laying ship (8) fitted with a J-lay tower (9), assembling respective ends ($2_1$, $2_5$) of said strings together by said welding to form a pipe.

**Patentansprüche**

1. Hämmervorrichtung (100) für das Durchführen eines Hämmerns innerhalb von Unterwasserleitungen (1) aus Stahl, die durch ringförmiges Schweißen der stumpf zusammengestoßenen Enden von einzelnen Leitungselementen (2a-2b) verbunden sind, wobei die Schweißnähte außerhalb der Leitung ausgebildet sind, wobei die Vorrichtung wenigstens ein Hämmerwerkzeug (5) umfaßt, das geeignet ist, sich axial längsverschieblich (XX) in axialer Richtung der Leitung und drehend um die axiale Längsachse (XX) der Leitung im Bereich der Schweißnähte (6) innerhalb der Leitung zu bewegen, wobei die Hämmervorrichtung (100) wenigstens einen Hammer aufweist, der umfaßt:- einen Hauptkörper ($5_5$), der einen Schlägel langgestreckter Form in einer Längsrichtung einer hin- und hergehenden relativen Translationsbewegung (Y1Y1) des Hammers gegenüber dem Hämmerwerkzeug und der Innenfläche der Leitung und der zu hämmernden Schweißnaht bildet, und

- ein gewölbtes Element ($5_4$) mit einer Krümmung konvexer Form am Ende des Schlägels, das mit diesem fest verbunden ist, wobei das gewölbte Element geeignet ist, mit der zu hämmernden Fläche in Kontakt zu gelangen, wodurch Einschläge in Form von Kratern unter der Wirkung der kinetischen Energie des Hammers gebildet werden, wenn dieser durch hin- und hergehende radiale Translationsbewegungen hämmernd betätigt wird,

**dadurch gekennzeichnet, daß**:

a) das Hämmerwerkzeug (5) einen einzigen Hammer umfaßt und
b) der Hammer schwenkbar angebracht ist, um die Neigung des Schlägels langgestreckter Form und der Richtung der hin- und hergehenden relativen Translationsbewegung (Y1Y1) des Hammers gegenüber der radialen Richtung (YY) verändern zu können, und
c) die Vorrichtung (100) umfaßt:

- einen ersten Schlitten (3), der geeignet ist, sich axial längsverschieblich (XX) innerhalb einer Leitung zu bewegen,
- wobei der erste Schlitten Mittel zum relativen axial längsverschieblichen Bewegen (XX) des Hämmerwerkzeugs gegenüber dem ersten Schlitten trägt, und
- wobei der erste Schlitten Mittel zum Relativdrehen des Hämmerwerkzeugs gegenüber dem ersten Schlitten, um die axiale Längsachse (XX) der Leitung trägt, und
- wobei der erste Schlitten Mittel zum relativen radialverschieblichen Bewegen (YY) des Hämmerwerkzeugs (5) gegenüber dem ersten Schlitten trägt, und

d) das Hämmerwerkzeug Mittel zum hämmernden Betätigen durch hin- und hergehende radiale Translationsbewegungen, durch Einsatz einer elektromagnetischen Energie umfaßt, wobei der Hammer einen Hauptkörper ($5_5$) aus magnetischem Material umfaßt, der geeignet ist, sich abwechselnd in beide Richtungen innerhalb einer festen Solenoidspule ($5_6$) in der der Längsrichtung des Hammers ($Y_1Y_1$) entsprechenden axialen Richtung des Solenoids, unter der Wirkung eines Magnetfeldes, das in dem Solenoid erzeugt wird, wenn das Solenoid abwechselnd jeweils in beide Richtungen mit elektrischem Gleichstrom beaufschlagt wird, zu bewegen, wobei der Hauptkörper ferner vorzugsweise mit einer Feder ($5_8$) zusammenwirkt.

2. Vorrichtung nach Anspruch 1, **dadurch gekennzeichnet, daß** die elektrische Versorgung des Solenoids durch eine Digitalsteuerung gesteuert wird, die ermöglicht, die Hämmerenergie in Abhängigkeit der mit einem Sensor ($5_9$) bestimmten Position des Hammers anzupassen.

3. Vorrichtung nach Anspruch 1 oder 2, **dadurch gekennzeichnet, daß**

- der erste Schlitten (3) motorisiert ist und eine erste Welle (4) trägt, die innerhalb der Leitung in der axialen Längsrichtung (XX) der Leitung angeordnet ist, und
- die erste Welle (4) wenigstens - vorzugsweise balkenförmige - Mittel oder Träger zur Querführung (4b) trägt, die geeignet sind, die radiale Verschiebebewegung (YY) wenigstens eines zweiten Schlittens (4c) in einer Querrichtung senkrecht zu der axialen Längsrichtung (XX) zu führen, wobei der zweite Schlitten das Hämmerwerkzeug trägt und wobei der zweite Schlitten vorzugsweise ein Mittel (4d) umfaßt, das geeignet ist, das Hämmerwerkzeug (5) in Position gegenüber der Innenfläche (2i) der Leitung zu halten, und

- die erste Welle (4) ein Antriebsmittel zum kontrollierten Drehen um sich selbst um ihre axiale Längsachse (XX) umfaßt, um den Träger zur radialen Querführung (4b) und das Hämmerwerkzeug (5) über den gesamten Umfang der Innenfläche (2i) der Leitung relativ drehend bewegen zu können, und

- die erste Welle (4) vorzugsweise geeignet ist, gegenüber dem ersten Schlitten (3) in der axialen Längsrichtung (XX) der Leitung, über wenigstens eine begrenzte Weite L relativ verschieblich angetrieben zu werden.

4. Vorrichtung nach einem der Ansprüche 1 bis 3, **dadurch gekennzeichnet, daß** der erste Schlitten (3) durch einen Motor (3a), der von außerhalb der Leitung über eine Versorgungsleitung (3d) gespeist wird, motorisch angetrieben ist, und der erste Schlitten Rollen (3e) umfaßt, die an die Innenfläche der Leitung angelegt sind und die axiale Längsverschiebebewegung des ersten Schlittens innerhalb der Leitung führen, wobei die Rollen durch ein System von als Gelenkparallelogramme angebrachten Armen (3b) mit einem axialen Hauptkörper (3₁) des ersten Schlittens verbunden sind.

5. Vorrichtung nach Anspruch 4, **dadurch gekennzeichnet, daß** das System von als Gelenkparallelogramme angebrachten Armen (3b) drei Parallelogrammstrukturen (3b) umfaßt, die jeweils zwei in axialer Richtung (XX) der Leitung ausgerichtete Rollen tragen, wobei die drei Parallelogrammstrukturen (3b) vorzugsweise gleichmäßig 120° voneinander verteilt angeordnet sind und durch Federn oder Zylinder (3c) synchron bestätigt werden, so daß der Hauptkörper (3₁) des ersten Schlittens im wesentlichen in der Achse (XX) der Leitung bleibt.

6. Vorrichtung nach einem der Ansprüche 1 bis 5, **dadurch gekennzeichnet, daß** das konvexe Element (5₄) ein Rotationselement mit sphärischer, ovaler oder parabolischer, vorzugsweise sphärischer Querschnittsform ist, das aus einem Stahl oder Metallkarbid größerer Härte als der Hauptkörper (5₅) des Hammers hergestellt ist, und das konvexe Element eine geringere Querschnittsabmessung, insbesondere einen gegenüber dem Hauptkörper des Hammers reduzierten Durchmesser aufweist.

7. Vorrichtung nach einem der Ansprüche 1 bis 5, **dadurch gekennzeichnet, daß** sie eine Vielzahl von Hämmerwerkzeugen umfaßt, die jeweils einen einzigen Hammer umfassen, wobei jedes Hämmerwerkzeug geeignet ist, unabhängig bewegt zu werden und wobei jeder Hammer geeignet ist, im Hämmern unabhängig gesteuert zu werden.

8. Vorrichtung nach Anspruch 7, **dadurch gekennzeichnet, daß** sie 2 Hämmerwerkzeuge umfaßt, wobei die erste Welle (4) zwei zweite Schlitten trägt, die jeweils ein Hämmerwerkzeug auf einem gleichen Querführungsträger (4b) tragen.

9. Vorrichtung nach Anspruch 7, **dadurch gekennzeichnet, daß** sie 4 Hämmerwerkzeuge umfaßt, wobei die erste Welle (4) zwei in Längsrichtung versetzte und umlaufende Querführungsträger (4b) trägt, wobei ein jeder der Führungsträger geeignet ist, die radiale Verschiebebewegung von zwei zweiten Schlitten (4c), die jeweils ein einziges Hämmerwerkzeug tragen, zu führen.

10. Verfahren zur Herstellung von Unterwasserleitungen (1) aus Stahl, umfassend das Verbinden der stumpf zusammengestoßenen Enden von einzelnen Leitungselementen (2a-2b) durch Schweißen, wobei die Stahl- oder Metallegierungsschweißnähte der Schweißungen außerhalb der Leitung angeordnet sind, **dadurch gekennzeichnet, daß** innerhalb der Leitung ein örtlich begrenztes Hämmern durchgeführt wird, um die Verdichtung des Stahls oder Metalls im Bereich der Schweißnähte (6, 6₂) und auf der umfangseitigen Innenfläche (2i) der benachbarten Leitung, auf beiden Seiten der Schweißnähte (6) zu erhöhen, so daß ein Korridor (7) aus einer gehämmerten Fläche über eine begrenzte Weite L in axialer Längsrichtung (XX) der Leitung, innerhalb der Leitung, vorzugsweise über eine Weite L, die wenigstens gleich der Breite der Schweißnaht ist, beiderseits erhöht um eine Breite von 1 bis 10 mm, erzeugt wird, wobei das Hämmern dadurch vollzogen wird, daß eine Vielzahl von Einschlägen, vorzugsweise in Form von benachbarten Kratern, welche die gesamte Fläche des Korridors bedecken, mit einer Hämmervorrichtung nach einem der Ansprüche 1 bis 9 erzeugt wird.

11. Verfahren nach Anspruch 10, **dadurch gekennzeichnet, daß** die Schweißnaht (6) eine Hauptschweißnaht (6₁) außerhalb der Leitung und einen Innenüberhang oder

- wulst (6₂) von geringerer Dicke, der auf der Seite des Innenraums der Leitung vorragt, umfaßt, und das Hämmern wenigstens im Übergangsbereich (2h, 2k) zwischen der Innenfläche (6₂, 6₃) des Wulstes (6₂ auf dem Rücken der Schweißnaht) und der benachbarten Innenfläche (2i) der Leitung, unter Variieren der Neigung (β) der Längs- und Verschieberichtung des Hammers (Y₁, Y₁) gegenüber der radialen Verschieberichtung des zweiten Schlittens (YY) durchgeführt wird.

12. Verfahren nach einem der Ansprüche 10 oder 11, **dadurch gekennzeichnet, daß** vor dem Hämmern ein Materialabtrag durch Vorschleifen oder -fräsen der Innenfläche der Leitung und der Schweißnaht (6, 6₂) im Bereich der zu hämmernden Fläche durchgeführt wird.

**13.** Verfahren nach einem der Ansprüche 10 bis 12, **dadurch gekennzeichnet, daß** das Hämmern durchgeführt wird, um über eine Dicke von 0,2 bis 2 mm der Innenfläche (2i) der Leitung und der Schweißnaht (6) das Verdichten zu vollziehen oder die Verdichtung zu erhöhen.

**14.** Verfahren nach einem der Ansprüche 10 bis 13, **dadurch gekennzeichnet, daß** die begrenzte Weite L das 1- bis 3-fache der Dicke der Leitung ausmacht.

**15.** Verfahren nach einem der Ansprüche 10 bis 14, **dadurch gekennzeichnet, daß** ein Hämmern durchgeführt wird, um eine Druckspannung von mehr als 5 MPa, vorzugsweise mehr als 50 MPa, über die gesamte gehämmerte Fläche zu erhalten.

**16.** Verfahren nach einem der Ansprüche 10 bis 15, **dadurch gekennzeichnet, daß**:

- der erste Schlitten (3) innerhalb der Leitung in der axialen Längsrichtung (XX) verschieblich bewegt wird, so daß das Hämmerwerkzeug (5) im wesentlichen so positioniert ist, daß es ein Hämmern im Schweißnahtbereich sowie auf beiden Seiten dessen, in axialer Längsrichtung (XX), über eine zu hämmernde Weite L, die Schweißnaht übergreifend, durchführen kann, anschließend

- das Hämmerwerkzeug an oder in der Nähe der Innenfläche der Leitung durch Radialverschiebung (YY) des Hämmerwerkzeugs bewegt wird, dann

- das Hämmerwerkzeug um die axiale Längsachse (XX) über den Umfang der Leitungsinnenfläche drehbewegt wird, anschließend

- gegebenenfalls das Hämmerwerkzeug in der axialen Längsrichtung (XX) gegenüber dem ersten Schlitten relativ verschieblich bewegt wird, um das Hämmern und das Verdichten über die gesamte gehämmerte Fläche zu vollziehen.

**17.** Verfahren nach einem der Ansprüche 10 bis 16, **dadurch gekennzeichnet, daß** es die folgenden aufeinanderfolgenden Schritte umfaßt, bei denen:

■ in einer Werkstätte an Land das Verbinden der jeweiligen Enden von wenigstens zwei einzelnen, stumpf zusammengestoßenen Leitungselementen (2a-2b) durch Schweißen ($2_2$, $2_3$, $2_4$) vollzogen wird, um Leitungsstränge (2) zu bilden, und

■ auf See, von einem Verlegungsschiff (8) aus, welches mit einem J-förmigen Verlegungsturm (9) ausgestattet ist, das Verbinden der jeweiligen Enden ($2_1$, $2_5$) der Stränge durch Schweißen vollzogen wird, um eine Leitung zu bilden.

10c 10a 10b

10

15

1c,1

1a,1

1b,1

**FIG.1**

$R_2$

$R_0$

$R_1$

13

$R\infty$

14b 14a 14c

14

**FIG.1A**

1

12

11

$R\infty$

EP 2 178 672 B1

FIG.2

FIG.2A

24

EP 2 178 672 B1

# FIG.3

X ────────── X

16
17
2a

# FIG.3A

2a          2b

# FIG.3A'

2a          2b

# FIG.3B

2a          2b

# FIG.3B'

2i    2h    6₂    2k    2i
2a         6₁       2b
              6

# FIG.3C

6₃
2a          2b

25

EP 2 178 672 B1

**FIG.3C'**

**FIG.3D**

**FIG.3E**

**FIG.3F**

26

**FIG.4A**

**FIG.4B**

**FIG.4C**

**FIG.4D**

EP 2 178 672 B1

FIG.5A

FIG.5B

FIG.5C

FIG.5D

FIG.5E

EP 2 178 672 B1

**FIG.6**

EP 2 178 672 B1

FIG.7

FIG.7A

30

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4491001 A
- FR 2791293
- US 3935055 A
- FR 0504848